# EUROPEAN PATENT APPLICATION

(11) **EP 4 328 192 A1**
(43) Date of publication of application: **28.02.2024**
(21) Application number: 23806153.5
(22) Date of filing: 13.04.2023
(51) Int. Cl.: C02F 1/42

(54) **TOP COVER ASSEMBLY AND WATER SOFTENING APPARATUS**

(30) Priority: 30.05.2022 CN 202210605805; 30.05.2022 CN 202210602620
(71) Applicant: Foshan Midea Chungho Water Purification Equipment Co., Ltd., Foshan, Guangdong 528311 (CN)
(72) Inventor: HU, Chenghuan, Foshan, Guangdong 528311 (CN); HAO, Zhipeng, Foshan, Guangdong 528311 (CN); QING, Pu, Foshan, Guangdong 528311 (CN); ZHANG, Bo, Foshan, Guangdong 528311 (CN); GONG, Ziming, Foshan, Guangdong 528311 (CN); HUANG, Rensheng, Foshan, Guangdong 528311 (CN); ZHENG, Yuedong, Foshan, Guangdong 528311 (CN); LIAO, Yumin, Foshan, Guangdong 528311 (CN)
(74) Representative: Whitlock, Holly Elizabeth Ann
(86) International application number: PCT/CN2023/088203
(87) International publication number: WO 2023/231608

(57) **Abstract**

A top cover component and a water softening device. The top cover assembly includes: a first frame body (110), a first top cover component (120) and a second top cover component (130). The first frame body (110) is formed with a first opening (52); the first top cover component (120) is connected to the first frame body (110) through a flexible member (112), and is switchable between an open state and a closed state; and the second top cover component (130) is connected to the first frame body (110) and located on a side of the first opening (52).

## Description

### CROSS-REFERENCE TO RELATED APPLICATION

The present disclosure is based on and claims priority to Chinese Patent Applications No. 202210602620.7 and 202210605805.3, filed on May 30, 2022, which are hereby incorporated by reference in their entireties.

### TECHNICAL FIELD

The present disclosure relates to the field of water softening, in particular to a top cover assembly and a water softening device.

### BACKGROUND

With the continuous improvement of living conditions, various water softening products continue to emerge. When the water softening products are installed and maintained in the related art, the installation and maintenance of the water softening products are affected due to a small opening angle of a flip cover of a display screen.

### SUMMARY

The present disclosure is intended to address at least one of the problems above. The present disclosure provides a top cover assembly, which effectively solves the problem of inconvenient installation and maintenance of a water softening device, increases the efficiency of the installation and maintenance of the water softening device, improves user experience, and enhances product competitiveness.

The present disclosure further provides a water softening device.

An embodiment of the present disclosure provides a top cover assembly, including:
a first frame body, formed with a first opening;
a first top cover component, where the first top cover component is connected to the first frame body through a flexible member, and is switchable between an open state and a closed state;
a second top cover component, where the second top cover component is connected to the first frame body and located on a side of the first opening;
wherein in the closed state, the first top cover component covers the first opening; and in the open state, the first top cover component is located above the second top cover component, and an included angle between the first top cover component and the second top cover component is less than a predetermined angle.

In the top cover assembly according to the embodiment of the present disclosure, by connecting the first top cover component and the first frame body through the flexible member, in the open state, the first top cover component is located above the second top cover component and the included angle between the first top cover component and the second top cover component is less than the predetermined angle, and a large opening angle can be formed between the first top cover component and the first opening, which does not affect the installation and maintenance of the water softening device, and the first top cover component does not need to be disassembled, which increases the efficiency of installation and maintenance of the water softening device, improves user experience, and enhances product competitiveness.

According to an embodiment of the present disclosure, the flexible member is detachably connected to at least one of the first frame body or the first top cover component.

According to an embodiment of the present disclosure, at least one of the first frame body or the first top cover component is provided with a snapslot, and the flexible member is connected within the snap-fit slot by a snap-fit.

According to an embodiment of the present disclosure, a limit block is provided at an end of the flexible member snap-fitted with the snap-fit slot, and the limit block is matched with the snap-fit slot limitedly.

According to an embodiment of the present disclosure, the first top cover component includes:
a first housing;
a second housing provided at a first side of the first housing, where a receiving cavity is formed inside the second housing, and a side of the second housing towards the first housing has an opening; and
a first seal, formed with at least two sealing surfaces,
where the first seal is provided at the first side of the first housing, and a side edge of the opening is matched hermetically with the sealing surfaces of the first seal; or the first seal is provided at a side edge of the opening and the first side of the first housing are matched hermetically with the sealing surfaces of the first seal.

According to an embodiment of the present disclosure, a positioner is provided at the first side of the first housing or a side edge of the opening, and the first seal is provided within the positioner.

According to an embodiment of the present disclosure, the positioner is a snap slot, and the first seal is snapped in the snap-fit slot.

According to an embodiment of the present disclosure, the first seal is formed with two sealing surfaces, and the first seal includes a first sealing portion and a second sealing portion connected to a side of the first sealing portion, a first sealing surface is formed at the first sealing portion towards the side edge of the opening or the first side of the first housing, and a second sealing surface is formed at the second sealing portion towards the side edge of the opening or the first side of the first housing.

According to an embodiment of the present disclosure, the first seal is formed with three sealing surfaces, and includes a first sealing portion, a second sealing portion disposed opposite to the first sealing portion and a third sealing portion connected to the first sealing portion and the second sealing portion respectively;
the side edge of the opening or a protruding ridge formed at the first side of the first housing is embedded between the first sealing portion and the second sealing portion,
a first sealing surface is formed at the first sealing portion towards the side edge of the opening or the side of the protruding ridge,
a second sealing surface is formed at the second sealing portion towards the side edge of the opening or the side of the protruding ridge, and
a third sealing surface is formed at the third sealing portion towards the side edge of the opening or the side of the protruding ridge.

According to an embodiment of the present disclosure, the top cover assembly further includes:
a light-transmitting panel provided at a second side of the first housing, and matched hermetically with the second side of the first housing.

According to an embodiment of the present disclosure, a side edge of the second side of the first housing is formed with a raised edge surrounding a periphery of the light-transmitting panel, and a height of the raised edge is the same as a thickness of the light-transmitting panel.

According to an embodiment of the present disclosure, a side of the raised edge towards the center of the first housing is formed with a round of grooves, and the grooves are configured to receive colloid for bonding the light-transmitting panel to the first housing.

An embodiment of the present disclosure provides a water softening device, including a machine body and the top cover assembly as described in any one of the above, and the machine body is connected to the first frame body.

An embodiment of the present disclosure provides a top cover device in which an overall structure can be disassembled and assembled to facilitate maintenance by integrating a top cover for adding salt and a top cover for valve group maintenance on a middle frame assembly.

The present disclosure further provides a water softener.

The top cover device according to the embodiment of the present disclosure includes:
a middle frame assembly, where the middle frame assembly is provided with a first through opening and a second through opening, and the middle frame assembly is detachably connected to a box body of the water softener;
a first top cover assembly, where the first top cover assembly is connected to the middle frame assembly, and is opposite to the first through opening for closing or opening the first through opening; and
a second top cover assembly, where the second top cover assembly is connected to the middle frame assembly, and is opposite to the second through opening for closing or opening the second through opening.

In the top cover device of the embodiment of the present disclosure, by integrating the first top cover assembly and the second top cover assembly of the water softener on the middle frame assembly, an operator does not need to consider the order in which the first top cover assembly and the second top cover assembly are opened when performing after-sales maintenance of the water softener, and only needs to disassemble the middle frame assembly from a box opening to implement the overall disassembly of the top cover device, which is simple and convenient, and the maintenance operation is simplified.

According to an embodiment of the present disclosure, the first top cover assembly includes: a cover body and a crank arm;
a first end of the crank arm is connected to an end of the cover body, and a second end of the crank arm is connected rotatably to the middle frame assembly, and
the cover body is flippable between a first position at which the first through opening is closed and a second position at which the first through opening is opened.

According to an embodiment of the present disclosure, the crank arm includes a long-arm segment and a short-arm segment;
the long-arm segment is arc-shaped, and the short-arm segment is linear; a first end of the long-arm segment is connected to an end of the cover body, a second end of the long-arm section is connected to a first end of the short-arm segment, and a second end of the short-arm segment is rotatably connected to the middle frame assembly;
where a distance between the second end of the short-arm segment and the first end of the long-arm segment is shorter than a distance between the first end of the short-arm segment and the first end of the long-arm segment.

According to an embodiment of the present disclosure, the first top cover assembly further includes: a stop portion and an abut portion; the stop portion is connected to the crank arm; the abut portion is provided at the middle frame assembly;
the stopper portion is separated from the abut portion when the cover body is in the first position; and the stopper portion abuts against the abut portion when the cover body is in the second position.

According to an embodiment of the present disclosure, the stopper is provided at an outer side of the crank arm.

According to an embodiment of the present disclosure, the crank arm is provided with a plurality of mounting positions provided in sequence along an extension direction of the crank arm, where the stop portion is detachably connected to any one of the plurality of mounting positions.

According to an embodiment of the present disclosure, the first top cover assembly further includes: a damping shaft with an end connected to the second end of the crank arm, and another end connected to the middle frame assembly.

According to an embodiment of the present disclosure, the second top cover assembly is detachably connected to the middle frame assembly.

According to an embodiment of the present disclosure, at least one of a human-computer interaction module or a display window is provided at the second top cover assembly.

An embodiment of the present disclosure a water softener, including:
a box body, where a receiving cavity is formed inside the box body, and a box opening is formed at the top of the box body communicating with the receiving cavity;
a resin tank, located in the receiving cavity; and
a top cover device of any one of the above embodiments, wherein the middle frame assembly is detachably mounted on the box opening, both the first through opening and the second through opening communicate with the receiving cavity respectively, and the second through opening is arranged opposite to the resin tank.

Additional aspects and advantages of the present disclosure will be set forth in part in the description which follows and, in part, will be apparent from the description, or may be learned by practice of the present disclosure.

### BRIEF DESCRIPTION OF DRAWINGS

In order to clearly illustrate the solutions according to the present application or the related art, the accompanying drawings used in the description of the embodiments of the present application or the related art are briefly described below. It should be noted that the drawings in the following description are of only part of embodiments of the present application. For those of ordinary skill in the art, other drawings can also be obtained according to these drawings without creative efforts.
FIG. 1 is a first schematic structural diagram of a top cover assembly in which a first top cover component is in an open state according to an embodiment of the present disclosure;
FIG. 2 is a schematic structural diagram of a top cover assembly in which a first top cover component is in a closed state according to an embodiment of the present disclosure;
FIG. 3 is a second schematic structural diagram of a top cover assembly in which a first top cover component is in an open state according to an embodiment of the present disclosure;
FIG. 4 is a partial enlarged schematic structural diagram of part A in FIG. 3;
FIG. 5 is a first cross-sectional schematic structural diagram of a locking component according to an embodiment of the present disclosure;
FIG. 6 is a three-dimensional schematic structural diagram of a button according to an embodiment of the present disclosure.
FIG. 7 is a second cross-sectional schematic structural diagram of a locking component according to an embodiment of the present disclosure;
FIG. 8 is a first cross-sectional schematic structural diagram of an ejector rod component according to an embodiment of the present disclosure;
FIG. 9 is a second cross-sectional schematic structural diagram of an ejector rod component according to an embodiment of the present disclosure;
FIG. 10 is an exploded schematic structural diagram of a top cover component according to an embodiment of the present disclosure;
FIG. 11 is an exploded schematic structural diagram of a first housing and a light-transmitting panel according to an embodiment of the present disclosure;
FIG. 12 is a schematic structural diagram of an assembly relationship between a first seal and a side edge of an opening according to an embodiment of the present disclosure;
FIG. 13 is a schematic structural diagram of an assembly relationship between a first seal and a side edge of an opening according to the other embodiment of the present disclosure;
FIG. 14 is a first schematic structural diagram of a water softener according to an embodiment of the present disclosure;
FIG. 15 is a second schematic structural diagram of a water softener according to an embodiment of the present disclosure;
FIG. 16 is an exploded schematic structural diagram of a top cover device according to an embodiment of the present disclosure;
FIG. 17 is a partially enlarged schematic diagram of k in FIG. 1 according to an embodiment of the present disclosure;
FIG. 18 is a schematic structural diagram of a middle frame assembly according to an embodiment of the present disclosure;
FIG. 19 is an exploded schematic structural diagram of a middle frame assembly according to an embodiment of the present disclosure;
FIG. 20 is a schematic structural diagram showing the installation of a snap-fit assembly and a plug assembly according to an embodiment of the present disclosure;
FIG. 21 is a schematic structural diagram of a flip cover assembly according to an embodiment of the present disclosure;
FIG. 22 is a schematic structural diagram of a fixing disc according to an embodiment of the present disclosure; and
FIG. 23 is a schematic structural diagram of fixing the top of a resin tank using a fixing disc according to an embodiment of the present disclosure.

### Reference numerals:

110: first frame body; 111: step; 112: flexible member; 113: snap slot; 114: limit block; 120: first top cover component; 121: first limit member; 122: first housing; 123: second housing; 125: positioner; 126: first sealing portion; 127: second sealing portion; 128: third sealing portion; 129: first sealing surface; 130: second top cover component; 131: second sealing surface; 132: third sealing surface; 133: light-transmitting panel; 134: raised edge; 135: groove; 140: ejector rod component; 141: first elastic member; 142: ejector rod; 143: first limit portion; 144: second limit portion; 145: chute; 146: strip-shaped separation slot; 147: first positioning post; 150: locking component; 151: button; 152: third limit portion; 153: second elastic member; 154: second snap tongue;
10: box body; 11: receiving cavity; 12: box opening;
20: middle frame assembly; 21: middle frame; 211: buckle head; 212: first guide surface; 213: flow guide slot; 214: mounting slot; 22: middle frame decorative ring; 221: buckle slot; 222: second guide surface; 23: snap-fit assembly; 231: snap-fit slot; 2311: first snap opening; 2312: second snap opening; 2313: third opening; 232: limit portion; 24: first through opening; 25: second through opening; 26: abut portion; 27: avoidance opening;
30: first top cover component; 31: cover body; 301: support portion; 311: panel layer; 312: inner lining layer; 313: support layer; 32: crank arm; 321: long-arm segment; 322: short-arm segment; 33: damping shaft; 34: adapter seat; 35: stop portion; 36: decorative member;
40: second top cover component;
50: fixing disc; 51: flexible disc body; 52: first opening; 53: notch; 54: first reinforcing rib; 55: second reinforcing rib; 56: plug; 561: guide portion; 562: snap-fit portion;
60: resin tank; 70: inner frame; 80: valve control assembly; 90: salt well assembly; 100: plug assembly; 1001: first plug terminal; 1002: second plug terminal; 110: salt pouring grille; 120: battery assembly.

### DETAILED DESCRIPTION OF THE EMBODIMENTS

Embodiments of the present disclosure are further described in detail below with reference to the drawings and embodiments. The following embodiments are intended to illustrate the disclosure, but not to limit the scope of the present disclosure.

In the description of the embodiments of the present disclosure, it is to be noted that the orientation or positional relationship indicated by terms such as "center", "longitudinal", "lateral", "upper", "lower", "front", "rear", "left", "right", "vertical", "horizontal", "top", "bottom", "inside", "outside", etc. are based on the orientation or positional relationship shown in the drawings, and are merely for the convenience of describing the embodiments of the present disclosure and simplifying the description, rather than indicating or implying that the device or component stated must have a particular orientation and are constructed and operated in a particular orientation, and thus is not to be construed as limiting the embodiments of the present disclosure. Moreover, the terms "first", "second", "third", and the like are used for descriptive purposes only and are not to be construed as indicating or implying relative importance.

In the description of the present disclosure, it should be noted that unless explicitly specified and defined otherwise, the terms "connected to" and "connected" shall be understood broadly, for example, it may be either fixedly connected or detachably connected, or can be integrated; it may be either mechanically connected, or electrically connected; it may be either directly connected, or indirectly connected through an intermediate medium. The specific meaning of the terms above in embodiments of the present disclosure can be understood by a person skilled in the art in accordance with specific conditions.

In the embodiments of the present disclosure, unless clearly stated and defined otherwise, the first feature being located "on" or "under" the second feature means that the first feature is in direct contact with the second feature, or the first feature is in contact with the second feature by an intervening media. In addition, the first feature is "on", "above" and "over" the second feature can refer to that the first feature is directly above or obliquely above the second feature, or simply refer to that the level height of the first feature is higher than that of the second feature. The first feature is "under", "below" and "beneath" the second feature can refer to that the first feature is directly below or obliquely below the second feature, or simply refer to that the level height of the first feature is lower than that of the second feature.

In the description of this specification, descriptions with reference to the terms "one embodiment", "some embodiments", "examples", "specific examples", or "some examples" etc. mean that specific features, structure, materials or characteristics described in conjunction with the embodiment or example are included in at least one embodiment or example of the embodiments of the present disclosure. In this specification, the schematic expressions of the above terms do not necessarily refer to the same embodiment or example. Furthermore, the particular features, structures, materials or characteristics described can be combined in any suitable manner in any one or more embodiments or examples. In addition, those skilled in the art may combine the different embodiments or examples described in this specification, as well as the features of the different embodiments or examples, without conflicting each other.

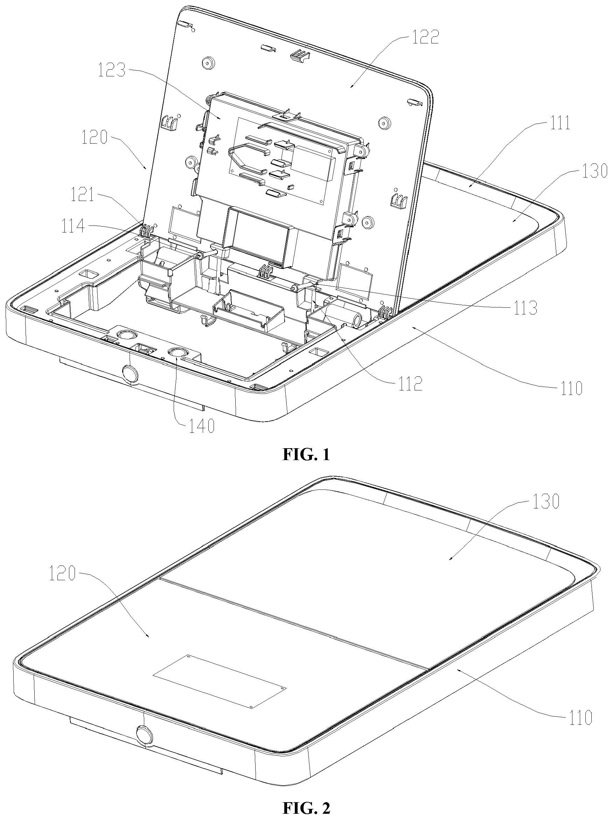

FIG. 1 illustrates a first schematic structural diagram of a top cover assembly in which a first top cover component is in an open state according to an embodiment of the present disclosure. The top cover assembly includes: a first frame body 110, a first top cover component 120 and a first top cover component 130. The first frame body 110 is formed with a first opening; the first top cover component 120 is connected to the first frame body 110 through a flexible member 112, and is switchable between an open state and a closed state. The second top cover component 130 is connected to the first frame body 110 and located on a side of the first opening. In the closed state, the first top cover component 120 covers the first opening; and in the open state, the first top cover component 120 is located above the second top cover component 130 and an included angle between the first top cover component 120 and the second top cover component 130 is less than a predetermined angle.

In the top cover assembly according to the embodiment of the present disclosure, by connecting the first top cover component 120 and the first frame body 110 through the flexible member, in the open state, the first top cover component 120 is located above the second top cover component 130 and the included angle between the first top cover component 120 and the second top cover component 130 is less than the predetermined angle, and a large opening angle can be formed between the first top cover component 120 and the first opening, which will not affect the installation and maintenance of the water softening device, and the first top cover component 120 does not need to be disassembled, which increases the efficiency of installation and maintenance of the water softening device, improves user experience, and enhances product competitiveness.

It may be understood that an end of the flexible member 112 is detachably connected to the first frame body 110, and another end of the flexible member 112 is fixedly connected to the first top cover component 120.

It may be understood that an end of the flexible member 112 is fixedly connected to the first frame body 110, and another end of the flexible member 112 is detachably connected to the first top cover component 120.

It may be understood that an end of the flexible member 112 is detachably connected to the first frame body 110, and another end of the flexible member 112 is detachably connected to the first top cover component 120.

It should be noted that the detachable connection here can be a snap-fit connection or a buckle connection.

It may be understood that, as shown in FIG. 1, both a first side of the first housing 122 and the middle frame of the first frame body 110 are provided with snap slots 113, and both ends of the flexible member 112 are connected within the corresponding snap slot 113 by a snap-fit respectively.

It should be noted that the snap slot 113 can also be provided at the first side of the first housing 122 or the middle frame of the first frame body 110.

It may be understood that a limit block 114 is provided at an end of the flexible member 112 connected with the snap slot 113 by a snap-fit, and the limit block 114 is matched with the snap slot 113 limitedly. The width of the snap slot 113 is shorter than a size of the limit block 114, and the limit block 114 cannot pass through the snap slot 113. By matching the snap slot 113 with the flexible member 112 by a snap-fit, the installation and disassembly of the first housing 122 can be facilitated.

It may be understood that a size of the first opening is 240 mm * 160 mm, and the predetermined angle is 0°. That is, in the open state, the first top cover component 120 is attached to an upper surface of the second top cover component 130 and the opening angle of the first top cover component 120 is 180°.

It may be understood that a limit portion is formed at a side of the second top cover component 130 away from the first opening or a side of the first frame body 110 away from the first opening. In the closed state, the first top cover component 120 covers the first opening; in the open state, the first top cover component 120 is located above the second top cover component 130 and is limitedly matched with the limit portion.

In the top cover assembly according to the embodiment of the present disclosure, by providing the limit portion on the side of the second top cover component 130 away from the first opening or the side of the first frame body 110 away from the first opening, the first top cover component 120 is located above the second top cover component 130 and is matched with the limit portion limitedly through the limit portion when the first top cover component 120 is in the open state. It effectively prevents the first top cover component 120 from sliding, enhances user experience, and improves product competitiveness.

It may be understood that the limit portion is a step 111 formed at a side of the first frame body 110 away from the first opening. In the open state, the first top cover component 120 abuts against the step 111. Since a side of the first frame body 110 away from the first opening is higher than the upper surface of the second top cover component 130, the step 111 is formed at a part of the side of the first frame body 110 away from the first opening higher than the upper surface of the second top cover component 130.

It should be noted that the formation of the step 111 is not limited to the above mode. When the height of the side of the first frame body 110 away from the first opening is the same as the height of the upper surface of the second top cover component 130, upwardly protruding steps 111 may be formed at the side of the frame body 110 away from the first opening, and the steps 111 may be continuous or may be arranged at intervals.

It may be understood that the limit portion is a raised edge 134 formed at the side of the second top cover component 130 away from the first opening. In the open state, the first top cover component 120 abuts against the raised edge 134. The raised edge 134 is formed at the side of the first housing 122 away from the first opening. The raised edge 134 is integrally formed with the first housing 122. The raised edge 134 may be continuous, or may be composed of a plurality of protrusions arranged at intervals.

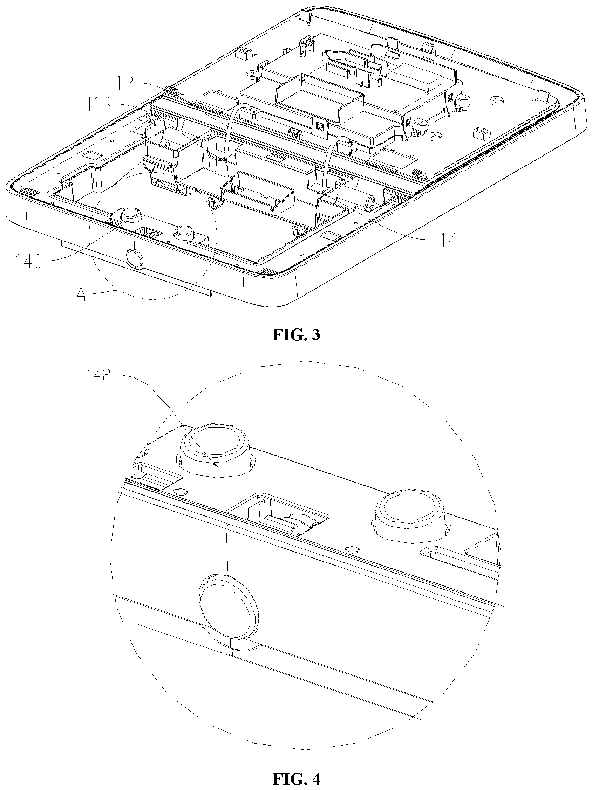

FIG. 2 illustrates a schematic structural diagram of a top cover assembly in which a first top cover component is in a closed state according to an embodiment of the present disclosure, FIG. 3 illustrates a second schematic structural diagram of a top cover assembly in which a first top cover component is in an open state according to an embodiment of the present disclosure, and FIG. 4 is a partial enlarged schematic structural diagram of A in FIG. 3. As shown in FIG. 1, FIG. 2, FIG. 3 and FIG. 4, the top cover assembly further includes an ejector rod component 140, and the first top cover component 120 is connected to the first frame body 110. The ejector rod component 140 is switchable between an extended state and a retracted state. In the retracted state, the first top cover member 120 covers the first opening; in the extended state, the ejector rod component 140 abuts against the first frame body 110 or the first top cover component 120, and an opening gap is formed between the opening side of the first top cover component 120 and the first frame body 110.

In the top cover assembly according to the embodiment of the present disclosure, by providing the ejector rod component 140, when the first top cover member 120 needs to be opened, the ejector rod component 140 is in the extended state, and the ejector rod component 140 abuts against the first frame body 110 or the first the top cover assembly 120, and the opening gap is formed between the opening side of the first top cover component 120 and the first frame body 110. The opening gap can facilitate the user to open the first top cover component 120 by hand, which enhances the user experience and improves product competitiveness.

It may be understood that, as shown in FIG. 3, the first frame body 110 is a rectangular frame body, a middle frame is formed in the middle of the first frame body 110, a first opening is formed at a side of the middle frame, and a second opening is formed at another side of the middle frame, and the second opening is covered by the second top cover component 130. When the first top cover component 120 is in the closed state, the upper edge of the first frame body 110 is flush with the opening side of the first top cover component 120, and the gap between them is small, it is inconvenient to open the first top cover component 120 by hand, and the ejector rod component 140 needs to be provided therefore. The opening gap may be formed between the opening side of the first top cover component 120 and the first frame body 110 through the ejector rod component 140 to conveniently open the first top cover component 120.

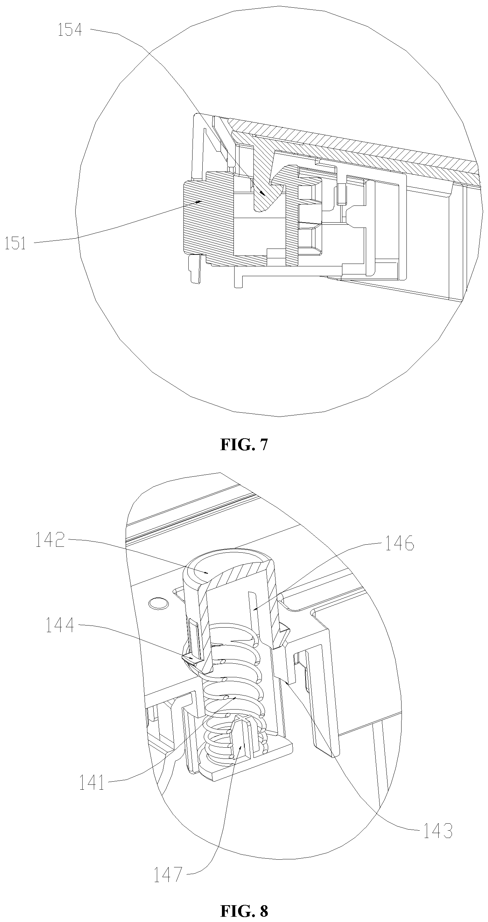

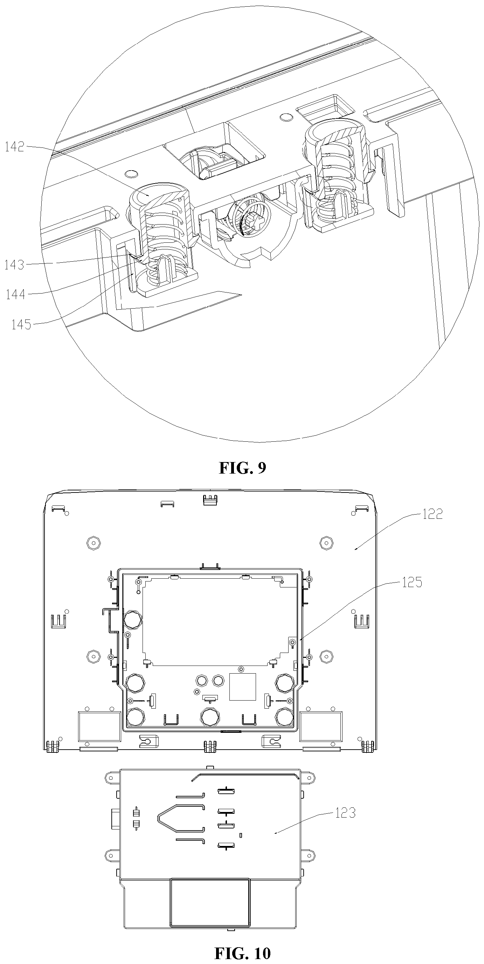

It may be understood that FIG. 8 illustrates a first cross-sectional schematic structural diagram of an ejector rod component 140 according to an embodiment of the present disclosure, and FIG. 9 illustrates a second cross-sectional schematic structural diagram of an ejector rod component 140 according to an embodiment of the present disclosure. As shown in FIG. 3, FIG. 8 and FIG. 9, two first mounting holes are formed at the side of the first frame body 110 towards the first top cover component 120. The top cover assembly includes two ejector rod components 140. The ejector rod components 140 are mounted in the first mounting holes in one-to-one correspondence. Each of the ejector rod components 140 includes a first elastic member 141 and an ejector rod 142. The first elastic member 141 is provided within the corresponding first mounting holes. The first elastic member 141 is a compression spring. A first end of the first elastic member 141 abuts against the bottom wall of the first mounting hole. The ejector rod 142 is provided within the first mounting hole, and the ejector rod 142 abuts against a second end of the first elastic member 141. In the retracted state, the ejector rod 142 is retracted into the first mounting hole, and the first elastic member 141 is in a first compressed state; and in the extended state, the ejector rod 142 extends from the first mounting hole and abuts against the first top cover component 120, and the first elastic member 141 is in a second compressed state.

It should be noted that in the retracted state, the ejector rod 142 may or may not abut against the first top cover component 120. When the top cover assembly is provided with a locking component 150, the ejector rod 142 abuts against the first top cover component 120. The first top cover component 120 will not be ejected by the ejector rod 142 since the locking component 150 locks the first top cover component 120. When the top cover assembly is not provided with the locking component 150, the ejector rod component 140 may further include a locking mechanism. In the retracted state, the ejector rod 142 is locked by the locking mechanism to lock the ejector rod 142 in the first mounting hole; the ejector rod 142 does not abut against the first top cover member 120. In the extended state, the locking mechanism unlocks the ejector rod 142, and the ejector rod 142 extends from the first mounting hole and abuts against the first top cover component 120.

It should be noted that the number of the ejector rod components 140 is not limited to two, it may be one, and it may also be three or more.

It may be understood that a first mounting hole is formed at the opening side of the first top cover component 120, and the first elastic member 141 is provided within the first mounting hole. The first elastic member 141 is the compression spring, and the first end of the first elastic member 141 abuts against the bottom wall of the first mounting hole. The ejector rod 142 is provided within the first mounting hole, and the ejector rod 142 abuts against the second end of the first elastic member 141. In the retracted state, the ejector rod 142 is retracted into the first mounting hole, and the first elastic member 141 is in the first compressed state; and in the extended state, the ejector rod 142 extends from the first mounting hole and abuts against the first frame body 110, and the first elastic member 141 is in the second compressed state.

It should be noted that an amount of compression of the first elastic member 141 in the first compressed state is greater than an amount of compression of the first elastic member 141 in the second compressed state. Mounting the ejector rod component 140 on the opening side of the first top cover component 120 has the same function as mounting the ejector rod component 140 on the first frame body 110, and the specific working principle will not be described in detail.

It may be understood that a first limit portion 143 is formed at a side wall of the first mounting hole, and a second limit portion 144 is formed at the ejector rod 142. In the extended state, the second limit portion 144 abuts against the first limit portion 143; in the retracted state, the second limit portion 144 is separated from the first limit portion 143. By providing the first limit portion 143 and the second limit portion 144, the first elastic member 141 is prevented from completely ejecting the ejector rod 142 out of the first mounting hole.

It may be understood that, as shown in FIG. 8 and FIG. 9, the first limit portion 143 is a first snap tongue provided at the side wall of the ejector rod 142, and the first snap tongue and the ejector rod 142 are integrally formed. A chute 145 extending along a depth direction of the first mounting hole is provided at the side wall of the first mounting hole and the first snap tongue is slidably matched with the corresponding chute 145. By slidably matching the first snap tongue with the corresponding chute 145, in addition to guiding the ejector rod 142, it can also play a limiting role on the ejector rod 142, and the ejector rod 142 can only reciprocate along the depth direction of the first mounting hole within a predetermined range without axial rotation. The second limit portion 144 is a wall at an end of the chute 145 away from the bottom wall of the first mounting hole. In the extended state, the first snap tongue abuts against the wall at the end of the chute 145 away from the bottom wall of the first mounting hole to limit the position of the ejector rod 142.

It may be understood that, as shown in FIG. 8 and FIG. 9, four strip-shaped separation slots 146 extending along the depth direction of the first mounting hole are formed at the ejector rod 142 and two first snap tongues are symmetrically provided at the side wall of the ejector rod 142. A strip-shaped separation slot 146 is respectively provided at both sides of each first snap tongue. By providing a strip-shaped separation slot 146 on both sides of the first snap tongue, only one end of the first snap tongue is connected to the side wall of the ejector rod 142, the first snap tongue is elastic in a radial direction of the ejector rod 142, which facilitates the installation and disassembly of the ejector rod 142.

It may be understood that, as shown in FIG. 8 and FIG. 9, a first positioning post 147 is provided at the bottom wall of the first mounting hole, and the first end of the first elastic member 141 sleeves on the outer periphery of the first positioning post 147. An end of the ejector rod 142 towards the first positioning post 147 is hollow and sleeves on the second end of the first elastic member 141. The first positioning post 147 may position the first elastic member 141 to prevent the first end of the first elastic member 141 from deflecting during the extrusion process.

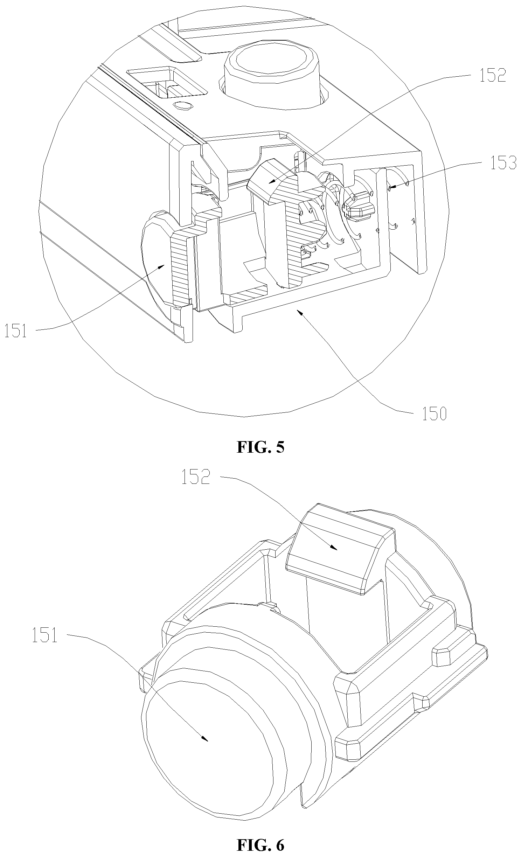

FIG. 5 illustrates a first cross-sectional schematic structural diagram of a locking component 150 according to an embodiment of the present disclosure; FIG. 6 illustrates a three-dimensional schematic structural diagram of a button 151 according to an embodiment of the present disclosure; FIG. 7 illustrates a second cross-sectional schematic structural diagram of a locking component 150 according to an embodiment of the present disclosure. As shown in FIG. 5, FIG. 6 and FIG. 7, the top cover assembly further includes the locking component 150. The locking component 150 is switchable between a locked state and an unlocked state. In the unlocked state, the first top cover component 120 is locked to the first frame body 110 through the locking component 150; in the unlocked state, the locking component 150 unlocks the first top cover component 120.

It may be understood that, as shown in FIG. 5, FIG. 6 and FIG. 7, the locking component 150 includes a button 151, a second elastic member 153 and a second snap tongue 154, and a second mounting hole is provided at the side wall of the first frame body 110, a through hole communicating with the second mounting hole is provided at a side of the first frame body 110 towards the first top cover component 120, and the through hole is used for allowing the second snap tongue 154 to enter and exit the second mounting hole.

The button 151 is provided within the second mounting hole. The button 151 is provided with a third limit portion 152, and the third limit portion 152 is used for being connected with the second snap tongue 154 by a snap-fit. The second elastic member 153 is provided within the second mounting hole. A first end of the second elastic member 153 abuts against the bottom wall of the second mounting hole. A second end of the second elastic member 153 abuts against the button 151. The second snap tongue 154 is provided at the opening side of the first top cover component 120. In the locked state, the button 151 is retracted into the second mounting hole, and the second snap tongue 154 is connected with the third limit portion 152 by a snap-fit; and in the extended state, the button 151 extends out of the second mounting hole, and the second snap tongue 154 is separated from the third limit portion 152.

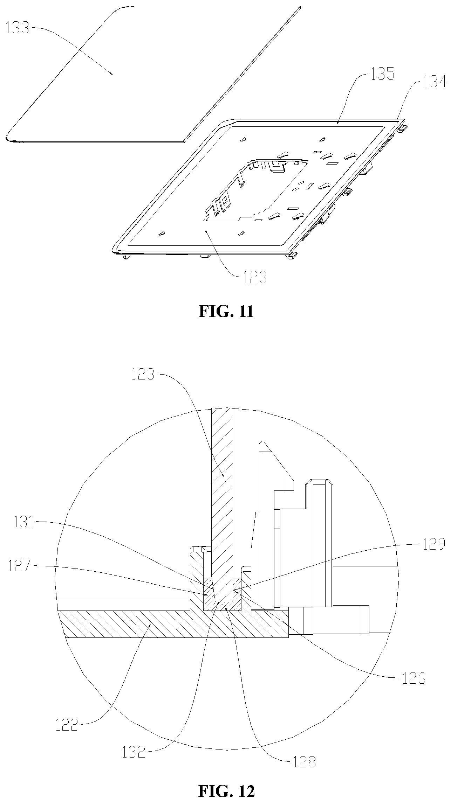

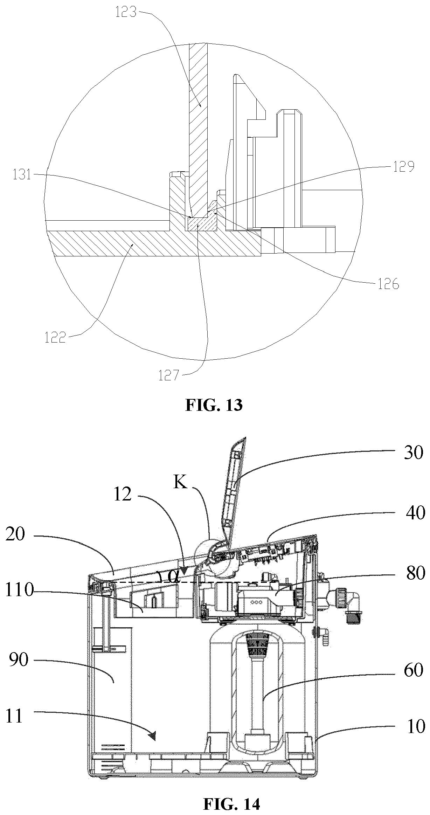

FIG. 10 illustrates an exploded schematic structural diagram of a top cover component according to an embodiment of the present disclosure; FIG. 12 illustrates a schematic structural diagram of an assembly relationship between a first seal and a side edge of an opening according to an embodiment of the present disclosure; FIG. 13 illustrates a schematic structural diagram of an assembly relationship between a first seal and a side edge of an opening according to the other embodiment of the present disclosure. As shown in FIG. 1, FIG. 10, FIG. 12 and FIG. 13, the first top cover component includes a first housing 122, a second housing 123 and a first seal 124. The second housing 123 is provided at a first side of the first housing 122, and a side of the second housing 123 towards the first housing 122 has an opening. The first seal 124 is formed with at least two sealing surfaces. The first seal 124 is provided at the first side of the first housing 122, and a side edge of the opening is matched hermetically with the sealing surfaces of the first seal 124; or the first seal 124 is provided at a side edge of the opening, and the first side of the first housing 122 is matched hermetically with the sealing surfaces of the first seal 124.

By forming at least two sealing surfaces on the first seal 124, and by hermetically matching the side edge of the opening or the first side of the first housing 122 with the sealing surface of the first seal 124, at least two sealing structures can be formed, even if one of the sealing structures fails, the other sealing structures can still play a sealing role, which effectively improves the sealing performance of the first top cover component and avoids short circuit problems between a display panel and an electronic control board. Since at least two sealing surfaces are formed using one seal, compared with using a plurality of seals for sealing, the number of seals is effectively reduced and the structure of the first top cover component is simplified.

It may be understood that the first top cover component 120 is connected to the first frame body 110 through the flexible member 112, and the first top cover component 120 is switchable between the open state and the closed state; and in the open state, the first top cover component 120 is located above the second top cover component, and the included angle between the first top cover component and the second top cover component is less than the predetermined angle.

It may be understood that the first housing 122 is a rectangular plate structure, the first housing 122 is provided with a mounting opening, and the second side of the first housing 122 is the opening side of the first top cover component. The first side of the first housing 122 is disposed opposite to the second side of the first housing 122, an end of the flexible member 112 is connected to the first side of the first housing 122, and another end of the flexible member 112 is connected to the first frame body 110. The first housing 122 is switchable between an open state and a closed state. The flexible member 112 is a drawstring. The flexible member 112 is used to connect the first housing 122 and the first frame body 110, the first housing 122 can be opened at a larger angle to facilitate the installation, maintenance and testing of the water softening device.

It may be understood that the first side of the first housing 122 is provided with a plurality of first limit members 121, and the first frame body 110 is provided with a plurality of positioning holes corresponding to the first limit members 121. When the first housing 122 is in the closed state, the first limit member 121 is embedded in the corresponding positioning hole and abuts against the edge of the positioning hole. The first housing 122 cannot move along a z-axis direction (thickness direction of the first housing 122) since the first housing 122 is limited by the first limit member 121 in the z-axis direction. Similarly, the first side of the first housing 122 is provided with a plurality of second limit members, and the first frame body 110 is provided with a plurality of positioning holes corresponding to the second limit members 121. When the first housing 122 is in the closed state, the second limit member is embedded in the corresponding positioning hole and abuts against the edge of the positioning hole. The second limit members are used to limit the first housing 122 in the x-axis direction and a y-axis direction (both the x-axis and the y-axis are on the plane where the first housing 122 is located) to prevent the gap between the first housing 122 and the first frame body 110 from increasing due to movement of the first housing 122 in the x-axis direction and the y-axis direction in the closed state, which improves the appearance of the first top cover component.

It may be understood that a plurality of fasteners are provided at the first side of the first housing 122 at intervals, and a plurality of snap tongues corresponding to the fasteners are provided at the side of the second housing 123, and the snap tongues correspond to the fasteners in one-to-one correspondence and are connected with each other by a snap-fit. The use of snap tongues and fasteners can facilitate the installation and disassembly of the second housing 123. In order to further strengthen the connection between the second housing 123 and the first housing 122, a plurality of screw holes are provided at intervals on the side of the second housing 123. The second housing 123 is connected to the second housing 123 through screws in the screw holes. The second housing 123 is fixed using screws and fasteners to attach the second housing 123 to the first seal 124 closely, which increase the airtightness between the second housing 123 and the first housing 122.

It may be understood that, as shown in FIG. 1 and FIG. 10, a receiving cavity is formed inside the second housing 123, and the receiving cavity is used to install a display assembly. The display assembly includes a control circuit board and a display screen, and the control circuit board is electrically connected to the display screen. The first housing 122 is provided with a mounting opening, the size of the mounting opening is shorter than the size of the opening, and the display screen is embedded in the mounting opening.

It may be understood that, as shown in FIG. 10, a positioner 125 is provided at the first side of the first housing 122, and the first seal 124 is provided within the positioner 125. The positioner 125 is used to fix the first seal 124. The positioner 125 encloses an outer periphery of the mounting opening. The shape of the positioner 125 is the same as the shape of the opening. The positioner 125 can be circular or square, which is specifically determined based on the shape of the opening.

It should be noted that the positioner 125 can be provided at the first side of the first housing 122, or may also be provided at the side edge of the opening. When the positioner 125 is provided at the side edge of the opening, a round of protruding ridges are provided at the first side of the first housing 122, and the shape of the protruding ridges is the same as the shape of the positioner 125.

It may be understood that, as shown in FIG. 10, the positioner 125 is a positioning slot provided at the first side of the first housing 122. The positioning slot is integrally formed with the first housing 122, and the first seal 124 is snapped in the positioning slot. After the second housing 123 is mounted in place, the first seal 124 is not only matched hermetically with the side edge of the opening, but also matched hermetically with at least one slot wall and the slot bottom of the positioning slot. By snapping the first seal 124 in the positioning slot, the first seal 124 can be mounted and disassembled conveniently, and the positioning slot can limit the first seal 124 during use, preventing the first seal from displacing, which affects the sealing effect of the first seal 124.

It should be noted that heights of the two walls of the positioning slot may be the same or different. The specific structure of the positioner 125 is not limited to the positioning slot. The positioner 125 may also be a round of blocking sheets, the blocking sheets enclose around the periphery of the mounting opening, and are integrally formed with the first housing 122. The first seal 124 is located inside the blocking sheets, that is, the first seal 124 is located on a side of the blocking sheets towards the mounting opening. After the second housing 123 is mounted in place, the first seal 124 is not only matched hermetically with the side edge of the opening, but also matched hermetically with inside of the blocking sheets and the first side of the first housing 122.

It may be understood that, as shown in FIG. 13, the first seal 124 is snapped in the positioning slot. The first seal 124 is formed with two sealing surfaces, and the first seal 124 includes a first sealing portion 126 and a second sealing portion 127. A side of the first sealing portion 126 is connected to a side of the second sealing portion 127, the second sealing portion 127 is perpendicular to the first sealing portion 126, and the first seal 124 has an L-shaped cross section. The first sealing surface 129 is formed at the first sealing portion 126 towards the side edge of the opening, that is, the first sealing surface 129 is formed at the left side of the first sealing portion 126 in FIG. 13. The second sealing surface 131 is formed at the second sealing portion 127 towards the side edge of the opening, that is, the second sealing surface 131 is formed at the upper surface of the second sealing portion 127 in FIG. 13. When the second housing 123 is mounted in place, the left side of the second housing 123 presses the first sealing surface 129 and is matched hermetically with the first sealing surface 129, and the right side of the first sealing portion 126 is matched hermetically with the slot wall. The lower surface of the left side of the second housing 123 presses the second sealing surface 131 and is matched hermetically with the second sealing surface 131, and the lower surface of the second sealing surface 131 is matched hermetically with the slot bottom. Due to the formation of two sealing structures, the airtightness of the first top cover component is effectively improved.

It may be understood that the positioning slot is provided at the side edge of the opening, and a slot opening of the positioning slot faces the first side of the first housing 122. A round of protruding ridges are provided at the first side of the first housing 122, and the first seal 124 is snapped in the positioning slot, the structure of the first seal 124 is the same as the above-mentioned embodiment. The first sealing surface 129 is formed at a side of the first sealing portion 126 towards the protruding ridges, and the second sealing surface 131 is formed at a side of the second sealing portion 127 towards the protruding ridges. Similarly, when the second housing 123 is mounted in place, the protruding ridges presses the first sealing surface 129 and are matched hermetically with the first sealing surface 129, and a side of the first sealing portion 126 away from the first sealing surface 129 is matched hermetically with the slot wall. The protruding ridges press the second sealing surface 131 and are matched hermetically with the second sealing surface 131, and a side of the second sealing portion 127 away from the second sealing surface 131 is matched hermetically with the slot bottom.

It may be understood that the first sealing surface 129 is an inclined surface, and the thickness of the first sealing portion 126 gradually becomes thicker along a direction in which the first sealing portion 126 approaches the second sealing portion 127. By providing the first sealing surface 129 as an inclined surface, the inclined surface may guide the side edge of the opening during the installation of the second housing 123, making it easier to install the side edge of the opening in place.

It may be understood that the side edge of the opening towards the first sealing surface 129 is an inclined surface, and the side edge of the opening away from the first sealing surface 129 is a horizontal surface. The side edge of the opening has a wedge-shaped cross section. When the side edge of the opening is embedded just in the positioning slot, the side edge may be easily embedded between the first sealing surface 129 and the slot wall of the positioning slot due to the thin thickness of the side edge. As a depth of the side wall embedded in the positioning slot increases, the thickness of the side edge becomes thicker and thicker, and the side edge is matched hermetically with the first sealing surface 129, which effectively improves the airtightness of the first top cover component.

It may be understood that, as shown in FIG. 12, the first seal 124 is snapped in the positioning slot. The first seal 124 is formed with three sealing surfaces, and the first seal 124 includes a first sealing portion 126, a second sealing portion 127 and a third sealing portion 128. The second sealing portion 127 is disposed opposite to the first sealing portion 126 and is parallel to the first sealing portion 126. A side of the third sealing portion 128 is connected to the first sealing portion 126 and the other side of the third sealing portion 128 is connected to the second sealing portion 127. The first sealing portion 126, the second sealing portion 127 and the third sealing portion 128 form a seal having a slot-shaped cross section.

As shown in FIG. 12, the side edge of the opening is embedded between the first sealing portion 126 and the second sealing portion 127, and a first sealing surface 129 is formed at the side of the first sealing portion 126 towards the side edge of the opening forms, that is, the first sealing surface 129 is formed at the left side of the first sealing portion 126. The second sealing surface 131 is formed at the second sealing portion 127 towards the side edge of the opening, that is, the second sealing surface 131 is formed at the right side of the second sealing portion 127. The third sealing surface 132 is formed at the third sealing portion 128 towards the side edge of the opening, that is, the third sealing surface 132 is formed at the upper surface of the third sealing portion 126. The first sealing surface 129 is matched hermetically with the right side of the side edge, and a side of the first sealing portion 126 away from the first sealing surface 129 is matched with the right slot wall hermetically; the second sealing surface 131 is matched hermetically with the left side of the side edge, and a side of the second sealing portion 127 away from the second sealing surface 131 is matched hermetically with the left slot wall. The third sealing surface 132 is matched hermetically with the lower surface of the side edge, and the lower surface of the third sealing portion 128 is matched hermetically with the slot bottom.

It may be understood that the positioning slot is provided at the side edge of the opening. A round of protruding ridges are provided at the first side of the first housing 122, and the first seal 124 is snapped in the positioning slot, the structure of the first seal 124 is the same as the above-mentioned embodiment. The protruding ridges are embedded between the first sealing portion 126 and the second sealing portion 127. A first sealing surface 129 is formed at a side of the first sealing portion 126 towards the protruding ridges, a second sealing surface 131 is formed at a side of the second sealing portion 126 towards the protruding ridges, and a third sealing surface 132 is formed at a side of the third sealing portion 128 towards the protruding ridges and the protruding ridges are matched hermetically with the three sealing surfaces respectively.

It may be understood that the first sealing surface 129 is an inclined surface, the second sealing surface 131 is a horizontal surface, and a distance between the first sealing surface 129 and the second sealing surface 131 gradually decreases along a direction in which first sealing portion 126 approaches the third sealing portion 128. A width of the slot opening of the slot-shaped seal is larger and a width of the slot bottom is smaller to conveniently embed the side edges of the opening or the protruding ridges into the slot-shaped seal.

It may be understood that, as shown in FIG. 12, the second sealing surface 131 is an inclined surface, the first sealing surface 129 is a horizontal surface, and the distance between the first sealing surface 129 and the second sealing surface 131 gradually decreases along the direction in which first sealing portion 126 approaches the third sealing portion 128.

It may be understood that both the first sealing surface 129 and the second sealing surface 131 are inclined surfaces and the distance between the first sealing surface 129 and the second sealing surface 131 gradually decreases along the direction in which first sealing portion 126 approaches the third sealing portion 128.

It may be understood that in order to increase the hermetically-matched area between the side edge of the opening and each sealing surface, the side edge of the opening is disposed to have a wedge-shaped cross section. When the side edge of the opening is embedded between the first sealing portion 126 and the second sealing portion 127, the side edge of the opening may have a larger hermetically-matched area with the first sealing surface 129 and the second sealing surface 131.

FIG. 11 illustrates an exploded schematic structural diagram of a first housing and a light-transmitting panel according to an embodiment of the present disclosure. As shown in FIG. 11, the first top cover component further includes a light-transmitting panel 133. The light-transmitting panel 133 is a plate-like structure made of light-transmitting material. The light-transmitting panel 133 is provided at the second side of the first housing 122 and is matched hermetically with the second side of the first housing 122. The area of the light-transmitting panel 133 is larger than the area of the mounting opening to ensure that the mounting opening can be blocked. The light-transmitting panel 133 forms a sealed housing with the first housing 122 and the second housing 123.

It may be understood that a side edge of the second side of the first housing 122 is formed with a raised edge 134 surrounding a periphery of the light-transmitting panel 133, a shape of the raised edge 134 is the same as that of the light-transmitting panel 133, and a height of the raised edge 134 is the same as a thickness of the light-transmitting panel 133. A side of the raised edge 134 away from the first housing 122 and the side of the light-transmitting panel 133 away from the first housing 122 are in the same plane. Providing the raised edge 134 can not only limit the position of the light-transmitting panel 133, but also smooth the surface of the first top cover component, which improves the appearance of the first top cover component.

It may be understood that a side of the raised edge 134 towards the center of the first housing 122 is formed with a round of grooves 135 and the grooves are rectangular and configured to receive colloid for bonding the light-transmitting panel 133 to the first housing 122. By providing the grooves 135, more colloid can be filled between the light-transmitting panel 133 and the first housing 122, improving a bonding strength between the light-transmitting panel 133 and the first housing 122 without increasing a total thickness of the light-transmitting panel 133 and the first housing 122.

A specific embodiment of the present disclosure is described below with reference to FIGS. 10 to 13. In FIGS. 10 to 13, the first top cover component includes a first housing 122, a second housing 123, a first seal 124 and a light-transmitting panel 133. The first housing 122 has a rectangular plate structure. The first housing 122 is provided with a mounting opening. The first housing 122 is connected to the first frame body 110 through a flexible member 112. The first housing 122 is switchable between an open state and a closed state. The flexible member 112 is a drawstring. The flexible member 112 is used to connect the first housing 122 and the first frame body 110, the first housing 122 can be opened at a larger angle to facilitate the installation, maintenance and debugging of the water softening device. Both the first housing 122 and the first frame body 110 are provided with snap slots 113, and both ends of the flexible member 112 are connected within the corresponding snap slot 113 by a snap-fit respectively. A limit block 114 is provided at an end of the flexible member 112 connected with the snap slot 113 by a snap-fit, and a width of the snap slot 113 is shorter than a size of the limit block 114. By matching the snap slot 113 with the flexible member 112 by a snap-fit, the first housing 122 can be conveniently assembled and disassembled.

The first side of the first housing 122 is provided with a plurality of first limit members 121, and the first frame body 110 is provided with a plurality of positioning holes corresponding to the first limit members 121. When the first housing 122 is in a closed state, the first limit member 121 is embedded in the corresponding positioning hole and abuts against the edge of the positioning hole. The first housing 122 cannot move along the z-axis direction (a thickness direction of the first housing 122) since it is limited by the first limit member 121 in the z-axis direction. Similarly, a side edge of the first side of the first housing 122 is provided with a plurality of second limit members, and the first frame body 110 is provided with a plurality of positioning holes corresponding to the second limit members 121. When the first housing 122 is in a closed state, the second limit member is embedded in the corresponding positioning hole and abuts against the edge of the positioning hole. The second limit members are used to limit the first housing 122 in the x-axis direction and the y-axis direction (both the x-axis and the y-axis are on the plane where the first housing 122 is located) to prevent an increase in the gap between the first housing 122 and the first frame body 110 due to movement of the first housing 122 in the x-axis direction and the y-axis direction in the closed state, which improves the aesthetic of the first top cover component.

A second housing 123 is provided at a first side of the first housing 122, a receiving cavity is formed inside the second housing 123, and the receiving cavity is used to mount a display assembly. The display component includes a control circuit board and a display screen, and the control circuit board is electrically connected to the display screen. The size of the mounting opening is shorter than the size of the opening, and the display screen is embedded in the mounting opening. The second housing 123 is opened towards a side of the first housing 122. A plurality of fasteners are provided at the first side of the first housing 122 at intervals, and a plurality of snap tongues corresponding to the fasteners are provided at the side of the second housing 123, and the snap tongues are connected with the fasteners by a snap-fit in one-to-one correspondence. The use of snap tongues and fasteners can facilitate the installation and removal of the second housing 123. In order to further strengthen the connection between the second housing 123 and the first housing 122, a plurality of screw holes are provided at intervals on the side of the second housing 123. The second housing 123 is connected to the second housing 123 through screws in the screw holes. The second housing 123 is fixed using screws and fasteners to attach the second housing 123 to the first seal 124 closely, which increase the airtightness between the second housing 123 and the first housing 122.

An embodiment of the present disclosure provides a water softening device, including a machine body and the top cover assembly as described in any one of the above embodiments, and the machine body is connected to the first frame body. By using the above top cover assembly, the top cover assembly can be opened conveniently, which enhances the user experience and improves the competitiveness of the water softening device.

A traditional water softener mainly includes a salt box, a resin tank mounted in the salt box, a control device, etc. When the water softener works, the functional ions of a resin unit in the resin tank exchange with calcium and magnesium ions in water, to reduce the concentration of calcium and magnesium ions in water, and decrease the hardness of water. When the resin unit in the resin tank is full of calcium and magnesium ions, the resin unit needs to be regenerated with special brine dissolved in the salt box to repeatedly use the resin unit in the resin tank.

When after-sales maintenance is performed at a water softener, a top cover corresponding to the resin tank in the water softener is opened after a top cover corresponding to a salt adding opening of the water softener has been opened, which has cumbersome operations and inconvenience in maintenance.

However, when operators are using the water softener, they often encounter the problem that a plug assembly on the water softener is easily separated, resulting in an overall power outage, inconvenience in the salt-adding operation, and inconvenience in maintenance for a valve control assembly and a salt well assembly on the water softener. In order to solve the above problems, an embodiment of the present disclosure provides a water softener as shown in FIG. 14 to FIG. 23.

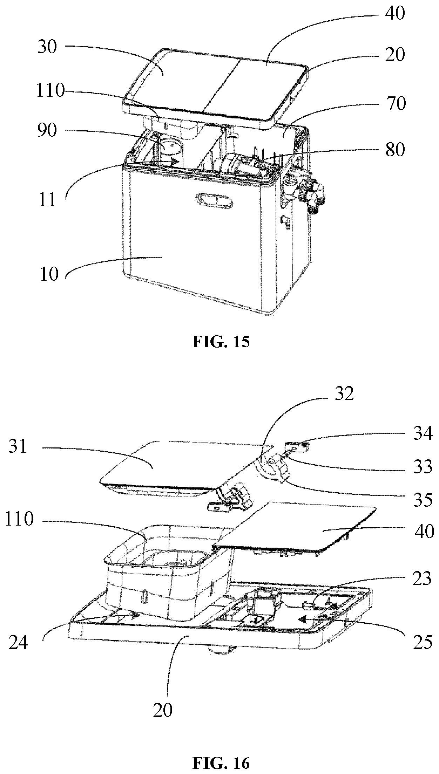

As shown in FIG. 14 and FIG. 15, the water softener according to the embodiment of the present disclosure includes a box body 10, a top cover device, a resin tank 60 and a salt well assembly 90. A receiving cavity 11 is formed in the box body 10, and a box opening 12 communicating with the receiving cavity 11 is provided at the top of the box body 10, the top cover device is mounted on the box opening 12, and the resin tank 60 and the salt well assembly 90 are mounted in the receiving cavity 11, respectively. The box body 10 shown in this embodiment is used to store salt, and the box body 10 is also referred to as the salt box of the traditional water softener.

As shown in FIG. 16, the top cover device according to the embodiment of the present disclosure includes a middle frame assembly 20, a first top cover assembly 30 and a second top cover assembly 40.

The middle frame assembly 20 is detachably connected to the box body 12 of the water softener 10, and the middle frame assembly 20 is provided with a first through opening 24. The first through opening 24 is used as a salt adding opening of the water softener and communicates with the receiving cavity 11.

In order to facilitate the salt-adding operation, in this embodiment, an end of the first top cover assembly 30 is connected rotatably to the middle frame assembly 20. In this case, the first top cover assembly 30 may also be called a flip cover assembly. By controlling flipping of the first top cover assembly 30 relative to the middle frame assembly 20, the first through opening 24 can be controlled to be opened and closed by the first top cover assembly 30.

As shown in FIG. 16, the first top cover assembly 30 according to the embodiment of the present disclosure includes a cover body 31 and a crank arm 32. A first end of the crank arm 32 is connected to an end of the cover body 31, and a second end of the crank arm 32 is connected rotatably to the middle frame assembly 20.

An adapter seat 34 is provided at the middle frame assembly 20, and the second end of the crank arm 32 is connected rotatably to the adapter seat 34. In order to ensure the appearance of the crank arm 32, a decorative member 36 is provided at the side of the crank arm 32, and the crank arm 32 and the decorative member 36 is connected detachably through a snap-fit structure.

In order to prevent the movement of the crank arm 32 from interfering with the middle frame assembly 20, in this embodiment, an avoidance opening 27 is provided at the middle frame assembly 20. At least part of the crank arm 32 is located in the avoidance opening 27, and the adapter seat 34 is provided at a side of the avoidance opening 27.

In this embodiment, based on the arrangement of the crank arm 32, the cover body 31 is flippable relative to the middle frame assembly 20 between a first position at which the first through opening 24 is closed and a second position at which the first through opening 24 is opened and it ensures that the cover body 1 can reach a relatively large flip angle relative to the middle frame assembly 20.

In some embodiments, the structure design of the crank arm 32 can be optimized, the flip angle of the cover body 31 relative to the middle frame assembly 20 is greater than 90°, the upper side of the first through opening 24 can reach a sufficiently large open space when the cover body 31 is in the second position, which facilitates the operator to add salt into the box body 10 through the first through opening 24.

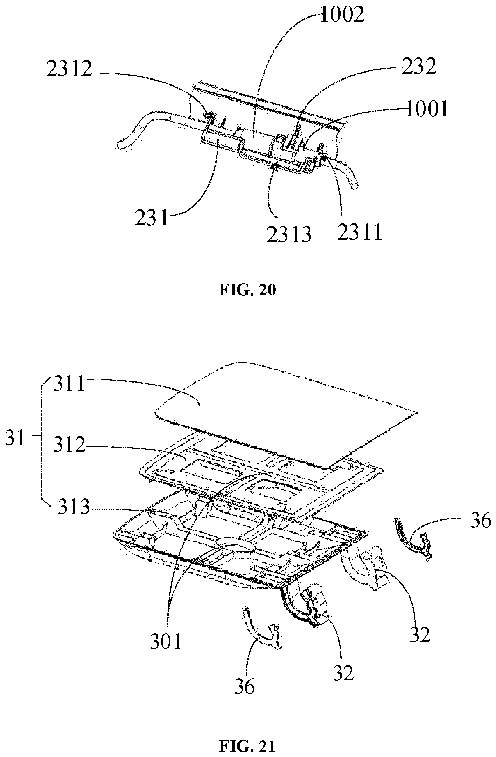

As shown in FIG. 15 and FIG. 21, in order to ensure that the flip angle of the cover body 31 relative to the middle frame assembly 20 is greater than 90°, the crank arm 32 shown in this embodiment includes a long-arm segment 321 and a short-arm segment 322.

The long-arm segment 321 is arc-shaped, and the short-arm segment 322 is linear; a first end of the long-arm segment 321 is connected to an end of the cover body 31, a second end of the long-arm section 321 is connected to a first end of the short-arm segment 322, and a second end of the short-arm segment 322 is connected rotatably with adapter seat 34 on the middle frame assembly.

A distance between the second end of the short-arm segment 322 and the first end of the long-arm segment 321 is shorter than a distance between the first end of the short-arm segment 322 and the first end of the long-arm segment 321, and the shape of the crank arm 32 is similar to a fishhook shape.

In this embodiment, the optimized design of the crank arm 32 not only ensures that the cover body 31 can reach a relatively large flip angle relative to the middle frame assembly 20, but also ensures that the cover body 31 is as far as possible from the first through opening 24 when reaching a maximum flip angle, which improves the convenience of salt-adding operation.

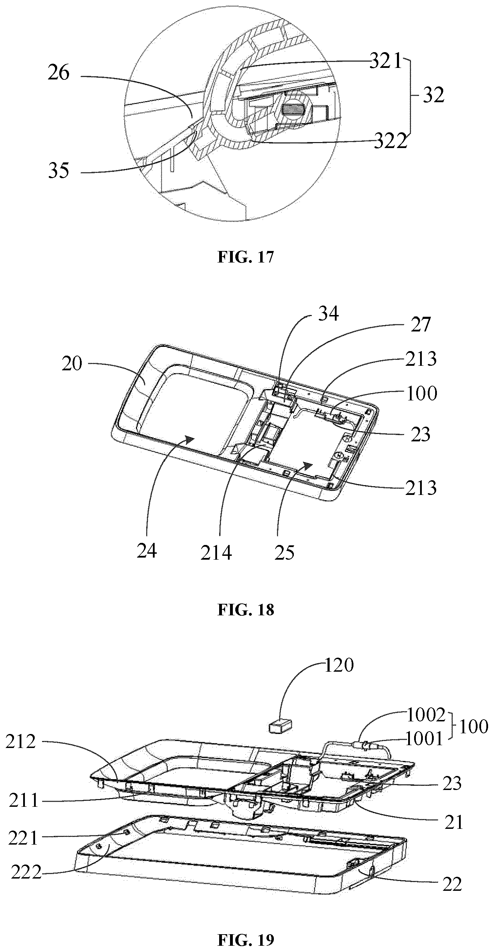

As shown in FIG. 17 and FIG. 21, the first top cover assembly 30 shown in this embodiment further includes a stop portion 35, the stop portion 35 is connected to the crank arm 32, and the stop portion 35 is used to abut against or be separated from the middle frame assembly 20.

In some embodiments, an abut portion 26 is provided at the middle frame assembly 20. The stop portion 35 is separated from the abut portion 26 when the cover body 31 is in the first position; and the stop portion 35 abuts against the abut portion 26 when the cover body 31 is in the second position.

The second position where the cover body 31 is located shown in this embodiment corresponds to a position where the cover body 31 reaches the maximum flip angle relative to the middle frame assembly 20. For example, the maximum flip angle of the cover body 31 relative to the middle frame assembly 20 can reach 100° to 150°.

When the cover body 31 is in the second position, the cover body 31 is inclined relative to a vertical surface, it is ensured that the cover body 31 reaches a force-balanced state based on abutting the stop portion 35 against the abutment portion 26, and cover body 31 can be stably maintained in the second position without the manual support of the operator, and the state of the cover body 31 will not change again. Only when the first through opening 24 needs to be closed, the cover body 31 is flipped from the second position to the first position under the driving of the operator.

As shown in FIG. 17, in order to facilitate control of the flip angle of the cover body 31 relative to the middle frame assembly 20, the stopper 35 shown in this embodiment is provided on an outer side of the crank arm 32.

Since at least part of the crank arm 32 is located in the avoidance opening 27 on the middle frame assembly 20, in this embodiment, the abut portion 26 is provided at a first wall of the avoidance opening 27, and the first wall of the avoidance opening 27 is opposite to the outer side of the crank arm 32. When the cover body 31 is in the first position, the stop portion 35 is away from the abut portion 26, and the cover body 31 is flipped in a first rotational direction relative to the middle frame assembly 20. The stop portion 35 is gradually close to the abut portion 26 along with the deflection of the crank arm 32 during a process in which the cover body 31 reaches the second position from the first position. The cover body 31 reaches the second position when the stop portion 35 abuts against the abut portion 26 and the cover body 31 cannot continue to flip along the first rotational direction.

In some embodiments, in order to control the maximum flip angle of the cover body 31 based on actual needs, the crank arm 32 is provided with a plurality of mounting positions provided in sequence along an extension direction of the crank arm 32, and the stop portion 35 is detachably connected to any one of the plurality of mounting positions.

In some examples, the plurality of mounting positions may be provided at the outer side of the crank arm 32, and each mounting position can be a buckle slot provided at the outer side of the crank arm 32. The stop portion 35 is formed with a buckle head. After determining the maximum flip angle of the cover body 31, the operator can determine the buckle slot corresponding to the maximum flip angle, and then directly buckle the buckle head on the stop portion 35 into the buckle slot corresponding to the maximum flip angle, and the cover body 31 can be controlled to reach the required maximum flip angle.

As shown in FIG. 16, the flip cover assembly further includes: a damping shaft 33. An end of the damping shaft 33 is connected to the second end of the crank arm 32, and another end of the damping shaft 33 is connected to the adapter seat 34 on the middle frame assembly 20.

In this embodiment, the damping shaft 33 may include a first shaft segment and a second shaft segment, the second end of the crank arm 32 is connected to an end of the first shaft segment, another end of the first shaft segment is connected rotatably to an end of the second shaft segment, and another end of the second shaft segment is connected to the adapter seat 34.

In this embodiment, another end of the first shaft segment is rotatably connected to an end of the second shaft segment, and it is also ensured that a contact friction force between another end of the first shaft segment and an end of the second shaft segment is greater than a predetermined value. The second end of the crank arm 32 is rotatably connected to the middle frame assembly 20 through the damping shaft 33, and it is also ensured that the cover body 31 can stay in any required suspend position during the flipping process.

In some embodiments, in order to ensure that the cover body 31 can be flipped reliably relative to the middle frame assembly 20, a plurality of crank arms 32 are provided in this embodiment. The plurality of crank arms 32 are arranged side by side, and first ends of each crank arm 32 are connected to an end of the cover body 31, and second ends of each crank arm 32 are connected rotatably to the middle frame assembly 20 through the damping shaft 33.

As shown in FIG. 21, in order to ensure the structural strength of the cover body 31 corresponding to the flip cover assembly, the cover body 31 shown in this embodiment includes a panel layer 311 and a support assembly. The panel layer 311 is connected to the support assembly. A support portion 301 is provided at the support assembly, and the support portion 301 is supported in a middle region of the panel layer 311.

The panel layer 311 shown in this embodiment is mounted on an upper surface of the support assembly, and the support portion 301 on the support assembly is in contact with the middle region of the panel layer 311. Since tempered glass has greater structural strength and can be cut into different shapes based on actual needs, the panel layer 311 shown in this embodiment can be a tempered glass layer.

The support assembly shown in this embodiment can be made of engineering plastic or steel structure with a certain structural strength.

The flip cover assembly shown in this embodiment is used in a water softener, to open or close the salt adding opening on the water softener. For example, when the middle frame assembly 20 is mounted on the box opening 12 of the water softener, and the flip cover assembly is rotatably mounted on the first through opening 24 of the middle frame assembly 20 to open or close the first through opening 24.

Based on the supporting effect of the support portion 301 on the middle region of the panel layer 311, the deformation resistance of the panel layer 311 can be increased, and the middle region of the panel layer 311 can be prevented from being recessed when the middle region of the cover body 31 is stressed too much.

In some embodiments, in order to facilitate the assembly of the panel layer 311 and the support assembly, the support assembly shown in this embodiment includes an inner lining layer 312 and a support layer 313. The inner lining layer 312 is sandwiched between the panel layer 311 and the support layer 313, and the panel layer 311, the inner lining layer 312 and the support layer 313 are connected in sequence.

During the actual assembly process, an adhesive layer may be provided between the panel layer 311 and the inner lining layer 312. The adhesive layer adopts 3M glue or polyurethane reactive glue (PUR glue, moisture-curing reactive polyurethane hot-melt glue), which are well known in the art.

In order to ensure the reliability of the bonding between the panel layer 311 and the inner lining layer 312, in this embodiment, a groove can be provided at a side of the inner lining layer 312 towards the panel layer 311, and a part of the adhesive layer is bonded to the groove. When the panel layer 311 and the inner lining layer 312 are bonded together, another part of the adhesive layer is bonded to the panel layer 311. A depth of the groove may be 0.3∼0.5 mm.

In order to facilitate the assembly of the lining layer 312 and the support layer 313, in this embodiment, the inner lining layer 312 and the support layer 313 may be connected through a plurality of buckle structures. The buckle structure consists of a buckle block and a buckle slot that can be buckled together.

In an example, a plurality of buckle blocks may be provided at a side of the inner lining layer 312 towards the support layer 313, and a plurality of buckle slots may be provided at a side of the support layer 313 towards the inner lining layer 312. When the side of the inner lining layer 312 towards the support layer 313 is attached to the side of the support layer 313 towards the inner lining layer 312, the plurality of buckle blocks are buckled in the plurality of buckle slots in one-to-one correspondence, to conveniently the connect inner lining layer 312 to the support layer 313 detachably.

In some embodiments, in order to conveniently support the middle region of the panel layer 311, the support layer 313 shown in this embodiment includes a first support platform, and the first support platform is provided in the middle region of the support layer 313; the inner lining layer 312 includes a second support platform, and the second support platform is provided in the middle region of the inner lining layer 312. The first support platform and the second support platform are connected to form the support portion 301 shown in the above embodiment.

The first support platform and the second support platform can be cylindrical, cube-shaped, boss-shaped, etc., which are not limited here.

As shown in FIG. 21, the support layer 313 shown in this embodiment includes a first frame and a first extension rib. There are a plurality of first extension ribs, ends of the plurality of first extension ribs are respectively connected to an inner side of the first frame, and another ends of the plurality of first extension ribs extend towards a center of the first frame respectively and are connected to a side of the first support platform located in the middle of the first frame.

The inner lining layer 312 shown in this embodiment includes a second frame and a second extension rib There are a plurality of second extension ribs, ends of the plurality of second extension ribs are respectively connected to an inner side of the second frame, and another ends of the plurality of second extension ribs respectively extends towards a center of the second frame and are connected to a side of the second support platform in the middle of the second frame.

The first frame and the second frame shown in this embodiment are detachably connected through the buckle structure shown in the above embodiment. While the first support platform and the second support platform are arranged opposite to each other, the plurality of first extension ribs and the plurality of second extension ribs are also arranged in one-to-one correspondence relative to each other.

As shown in FIG. 18, in practical applications, a first plug terminal 1001 is provided at an end of a power adapter of the water softener, and a second plug terminal 1002 is provided at an end of an internal power cord of the water softener. After a first end of the first plug terminal 1001 is plugged into a first end of the second plug terminal 1002 to form a plug assembly 100, an external power supply can supply power to the water softener through the plug assembly 100. Since the plug assembly 100 is usually placed randomly in the water softener, when an end of the power adapter is stressed, the first plug terminal 1001 is easily separated from the second plug terminal 1002, which causes the water softener to not work properly.

As such, in this embodiment, a mounting component is provided at the middle frame assembly 20. The mounting component is used to mount the plug assembly 100, to prevent the plug assembly 100 from being placed randomly in the water softener, which causes that the first plug terminal 1001 and the second plug terminal 1002 on the plug assembly 100 are separated under the action of an external force.

The mounting component may be a binding component, a clamping component, a snap-fit component, a locking component, etc. that are well known in the art, and are not specifically limited here.

In order to mount conveniently the plug assembly 100, the mounting component shown in this embodiment may be a snap-fit assembly 23.

As shown in FIG. 18 to FIG. 20, in order to solve the problem that the plug assembly 100 is easily separated under the action of the external force, this embodiment provides a middle frame assembly 20. The middle frame assembly 20 includes a middle frame 21 and a snap-fit assembly 23. The snap-fit assembly 23 includes a snap-fit slot 231. The snap-fit slot 231 is connected to the middle frame 21. The snap-fit slot 231 is used to receive the plug assembly 100. The snap-fit slot 231 is provided with a first snap opening 2311 and a second snap opening 2312, and the first snap opening 2311 and the second snap opening 2312 are provided at slot walls at both ends of the snap-fit groove 231 along a length direction respectively.

The second end of the first plug terminal 1001 generally has a first connection wire extending towards the power adapter, and a diameter of the first connection wire is shorter than that of the second end of the first plug terminal 1001. Accordingly, the second end of the second plug terminal 1002 generally has a second connection wire extending towards internal electrical components inside the water softener, and a diameter of the second connection wire is less than that of the second end of the second plug terminal 1002.

In practical applications, the first connection wire corresponding to the first plug terminal 1001 penetrates through the first snap opening 2311, and the first snap opening 2311 is connected to the second end of the first plug terminal 1001 by a snap-fit. The second connection wire corresponding to the second plug terminal 1002 penetrates through the second snap opening 2312, and the second snap opening 2312 is connected to the second end of the second plug terminal 1002 by a snap-fit.

In some examples, a width of the first snap opening 2311 may be shorter than a maximum diameter of the second end of the first plug terminal 1001, and a width of the second snap opening 2312 may be shorter than a maximum diameter of the second end of the second plug terminal 1002.

When the first plug terminal 1001 is subjected to a traction force from the power adapter, the first plug terminal 1001 cannot pass through the first snap opening 2311 under the action of the traction force, and the first snap opening 2311 limits the first plug terminal 1001 from moving towards a side away from the second plug terminal 1002, which can prevent the plug assembly 100 from being separated under the action of an external force.

When the operator accidentally exerts a pulling force on a connection wire of the second plug terminal 1002, the second plug terminal 1002 cannot pass through the second snap opening 2312 under the action of the traction force, and the second snap opening 2312 limits the second plug terminal 1002 from moving towards a side away from the first plug terminal 1001, which can prevent the plug assembly 100 from being separated under the action of an external force.

As shown in FIG. 20, in order to further prevent the first plug terminal 1001 from separating from the second plug terminal 1002 under the action of the traction force of the power adapter, the snap-fit assembly 23 shown in this embodiment further includes a limit portion 232. The limit portion 232 is connected to the middle frame 21, and the limit portion 232 is provided outside the snap-fit slot 231 and close to a slot opening of the snap-fit slot 231.

The limit portion 232 may be a limit block well-known in the art. A clamping gap is formed between a side of the limit block towards the snap-fit slot 231 and a slot bottom of the snap-fit slot 231. The width of the clamping gap is greater than or equal to a maximum diameter of the first plug terminal 1001.

In practical applications, a protrusion is usually provided at an end of the first plug terminal 1001 away from the power adapter. After the first plug terminal 1001 is mounted into the snap-fit slot 231 and snap-fitted with the second plug terminal 1002, the limit portion 232 is provided between the protrusion and the first snap opening 2311 along a length direction of the snap-fit slot 231, and the limit portion 232 abuts against the protrusion.

As such, when the power adapter pulls the first plug terminal 1001 under its own gravity, the first snap opening 2311 limit an end of the first plug terminal 1001 close to the power adapter, and the limit portion 232 further limits the end of the first plug terminal 1001 away from the power adapter. The snap-fit assembly 23 shown in this embodiment can reliably prevent the first plug terminal 1001and the second plug terminal 1002 from separating from each other under the pulling force of external force.

As shown in FIG. 20, in order to facilitate the installation of the plug assembly 100, the snap-fit slot 231 shown in this embodiment is provided with a third opening 2313. The third opening 2313 is provided at a slot wall of the snap-fit slot 231 along the length direction, and the third opening 2313 is used for the first plug terminal 1001 or the second plug terminal 1002 to pass through.

In some embodiments, the third opening 2313 shown in this embodiment extends along the length direction of the snap-fit slot 231. In order not to affect the snap-fit effect of the snap-fit slot 231 on the entire plug assembly 100, in this embodiment, the length of the third opening 2313 extending along the length direction of the snap-fit slot 231 is shorter than a length of the snap-fit slot 231, and longer than a length of the first plug terminal 1001 or a length of the second plug terminal 1002.

As shown in FIG. 15, FIG. 18 and FIG. 19, a flow guide slot 213 is provided at a first surface of the middle frame assembly 20 shown in this embodiment, at least one end of the flow guide slot 213 extends to a second surface of the middle frame assembly 20, the second surface of the middle frame assembly 20 is opposite to the first surface of the middle frame assembly 20, and the second surface of the middle frame assembly 20 faces a bottom surface of the box body 10.

The flow guide slot 213 may be provided at a first surface of the middle frame 21, the snap-fit assembly 23 is provided at a side of the flow guide slot 213, at least one end of the flow guide slot 213 extends to a second surface of the middle frame 21, the second surface of the middle frame 21 is opposite to the first surface of the middle frame 21, and the second surface of the middle frame 21faces the bottom surface of the box body 10.

The middle frame assembly 20 shown in this embodiment is detachably connected to the inner frame 70 in the box body 10 through the middle frame 21.

After the water softener is filled with water, in order to prevent water from flowing into or dripping onto electrical components inside the water softener, especially to prevent water droplets from dripping onto the plug assembly 100, in this embodiment, the flow guide slot 213 collects water droplets dripping onto the first surface of the middle frame 21, and guides the collected water droplets to flow into the box body 10, which prevents short circuits in the electrical components inside the water softener and prevents the operator from accidental electric shock during use, which ensures safety.

In the above embodiment, in order to meet a rotation requirement of the crank arm 32, an avoidance opening 27 is provided at the middle frame assembly 20. An end of the avoidance opening 27 is formed at the first surface of the middle frame assembly 20, and another end of the avoidance opening 27 is formed at the second surface of the middle frame assembly 20. In this embodiment, at least one end of the flow guide slot 213 can be extended to the avoidance opening 27, and the water flow collected on the first surface of the middle frame 21 flows directly into the box body 10 through the avoidance opening 27.

As shown in FIG. 18 and FIG. 19, a mounting slot 214 is provided at the first surface of the middle frame 21 shown in this embodiment. A slot wall of the mounting slot 214 protrudes from the first surface of the middle frame 21, and the mounting slot 214 is used to mount the battery assembly 120.

It may be understood that in this embodiment, a first surrounding rib, a second surrounding rib, a third surrounding rib and a fourth surrounding rib can be provided at the first surface of the middle frame 21, and are connected in sequence as a ring shape, to form a mounting slot 214 on the first surface of the middle frame 21.

In this embodiment, lengths and distribution positions of the first surrounding rib, the second surrounding rib, the third surrounding rib and the fourth surrounding rib can be adaptively set based on a specific shape of the battery assembly 120, and the mounting slot 214 is shaped to be matched with the battery assembly 120.

As shown in FIG. 18 and FIG. 19, the middle frame assembly 20 shown in this embodiment further includes: a middle frame decorative ring 22. The middle frame decorative ring 22 sleeves on an outer side of the middle frame 21 to ensure the aesthetics of the middle frame assembly 20.

In practical applications, a large matching gap often exists between the middle frame 21 and the middle frame decorative ring 22 due to different shrinkage degrees thereof, which not only affects the overall aesthetics of the middle frame assembly 20, but also is detrimental to the assembly of the middle frame assembly 20 on the box body 10.

As such, the middle frame assembly 20 shown in this embodiment is further provided with a plurality of quick-connect structures. The plurality of quick-connect structures are arranged sequentially along a circumferential direction of the middle frame 21, and each quick-connect structures is used to connect the middle frame 21 with the middle frame decorative ring 22.

In some embodiments, the middle frame assembly 20 can be fastened at a plurality of points along the circumferential direction based on the plurality of quick-connect structures, which ensures that the matching gap between the middle frame 21 and the middle frame decorative ring 22 is evenly distributed.

In some examples, the quick-connect structure shown in this embodiment can be a locking bolt, a plurality of first screw holes are provided at the middle frame 21, and are arranged along the circumferential direction of the middle frame 21. A plurality of second screw holes are provided at the middle frame decorative ring 22, the plurality of second screw holes are arranged along the circumferential direction of the middle frame decorative ring 22, and the plurality of first screw holes and the plurality of second screw holes are arranged in one-to-one correspondence relative to each other.

When the middle frame 21 is assembled with the middle frame decorative ring 22, in this embodiment, it is only necessary to fasten the first screw holes and the second screw holes arranged in one-to-one correspondence relative to each other by using locking bolts.

In some examples, in order to further ensure the convenience of assembling the middle frame 21 with the middle frame decorative ring 22, the quick-connect structure shown in this embodiment adopts a buckle structure. The buckle structure includes a buckle head 211 and a buckle slot 221. One of the buckle head 211 and the buckle slot 221 is provided at the middle frame 21, the other one of the buckle head 211 and the buckle slot 221 is provided at the middle frame decorative ring 22, and the buckle head 211 is buckled in the buckle slot 221.

As shown in FIG. 19, in this embodiment, a plurality of buckle heads 211 are provided at the outer side of the middle frame 21, and a plurality of buckle slots 221 are provided at an inner side of the middle frame decorative ring 22.

When the middle frame 21 is assembled with the middle frame decorative ring 22, the operator only needs to ensure that the plurality of buckle heads 211 on the middle frame 21 and the plurality of buckle slots 221 on the middle frame decorative ring 22 are arranged in one-to-one correspondence relative to each other, and then the middle frame 21 is pressed towards a side facing the middle frame decorative ring 22, to easily assemble the middle frame 21 and the middle frame decorative ring 22. When the middle frame 21 is disassembled from the middle frame decorative ring 22, only a force for separating the middle frame 21 from the middle frame decorative ring 22 needs to be applied. The assembly and disassembly operations are simple and fast.

As shown in FIG. 19, in this embodiment, a first guide surface 212 is provided at the outer side of the middle frame 21, and a second guide surface 222 is provided at the inner side of the middle frame decorative ring 22. The first guide surface 212 is matched with the second guide surface 222.

The first guide surface 212 and the second guide surface 222 may be arc-shaped surfaces, inclined surfaces, etc. matched with each other, and are not specifically limited here.

When the middle frame 21 is assembled with the middle frame decorative ring 22, the middle frame decorative ring 22 can be quickly sleeved on the outer side of the middle frame 21 based on guiding effects of the first guide surface 212 and the second guide surface 222. After the middle frame 21 is assembled with the middle frame decorative ring 22, the first guide surface 212 is attached to the second guide surface 222.

In this embodiment, the buckle head 211 shown in the above embodiment can be provided at one of the first guide surface 212 and the second guide surface 222, and the buckle slots 221 can be provided at the other one of the first guide surface 212 and the second guide surface 212. Under the guidance of the first guide surface 212 and the second guide surface 222, the buckle head 211 is better buckled into the buckle slots 221, to quickly assemble the middle frame 21 with the middle frame decorative ring 22.

In this embodiment, the first guide surface 212 can be provided to extend along the circumferential direction of the middle frame 21, and the second guide surface 222 can be provided to extend along the circumferential direction of the middle frame decorative ring 22. Both the first guide surface 212 and the second guide surface 222 are arc-shaped surfaces.

In this embodiment, both the first guide surface 212 and the second guide surface 222 are arc-shaped surfaces. Based on the first guide surface 212 and the second guide surface 222, the middle frame 21 and the middle frame decorative ring 22 can be quickly assembled. When the assembly is completed, it can also prevent the middle frame 21 from disengaging from the middle frame decorative ring 22 after they are assembled to a certain extent.

Based on the first top cover assembly 30 shown in the above embodiment, this embodiment provides a top cover device. The top cover device includes the middle frame assembly 20 and the first top cover assembly 30 shown in the above embodiment.

The first top cover assembly 30 shown in this embodiment is specifically a flip cover assembly. The flip cover assembly includes a cover body 31 and a crank arm 32. A first end of the crank arm 32 is connected to an end of the cover body 31, and a second end of the crank arm 32 is connected rotatably to the middle frame assembly 20. The middle frame assembly 20 is provided with a first through opening 24. The middle frame assembly 20 is detachably connected to the box opening 12 of the box body 10 shown in the above embodiment. The cover body is flipped relative to the middle frame assembly 20 between a first position in which the first through opening 24 is closed and a second position in which the first through opening 24 is opened.

In this embodiment, the structures of the cover body 31, the crank arm 32 and the middle frame assembly 20 will not be described again one by one.

The middle frame assembly 20 is not limited to only being provided with the first through opening 24. The middle frame assembly 20 can further be provided with a second through opening 25. The first through opening 24 is convenient for the operator to add salt to the water softener, and the second through opening 25 is convenient for the operator to inspect and repair the internal components of the water softener.

As shown in FIG. 18 and FIG. 19, the middle frame assembly 20 shown in this embodiment is provided with the first through opening 24 and the second through opening 25. The middle frame assembly 20 is detachably connected to the box opening 12 of the box body 10 shown in the above embodiment.

Since the inner frame 70 is mounted on the box opening 12, in this embodiment, a plurality of groove buckles can be provided at the inner frame 70 along the circumferential direction, and a plurality of lump buckles in one-to-one correspondence with the plurality of groove buckles can be provided at the middle frame assembly 20 along the circumferential direction. By buckling the plurality of lump buckles to the plurality of groove buckles, the middle frame assembly 20 can be easily detachably connected to the box opening 12.

The first top cover assembly 30 shown in this embodiment is connected to the middle frame assembly 20, and the first top cover assembly 30 is opposite to the first through opening 24 for closing or opening the first through opening 24. During actual installation, in this embodiment, the first top cover assembly 30 can be connected rotatably to the middle frame assembly 20, and the first through opening 24 can be closed or opened based on a flipping characteristic of the first top cover assembly 30. The first top cover assembly 30 shown in this embodiment is also called a flip cover assembly.

In some embodiments, the top cover device shown in this embodiment further includes a second top cover assembly 40. The second top cover assembly 40 is connected to the middle frame assembly 20, and the second top cover assembly 40 is opposite to the second through opening 25 for closing or opening the second through opening 25. In practical applications, the second top cover assembly 40 can play a role of displaying data and a window for observation, and the second top cover assembly 40 is also called a display cover assembly.

In the actual arrangement, the first through opening 24 and the second through opening 25 communicate with the receiving cavity 11 of the box body 10 respectively. One of the first through opening 24 and the second through opening 25 can be used as the salt adding opening of the water softener for adding salt into the box body 10, and the other one of the first port 24 and the second through opening 25 is used as a maintenance opening to facilitate the operator to inspect the valve control assembly 80 at a top of the resin tank 60.

As shown in FIG. 14 and FIG. 15, the first through opening 24 shown in this embodiment is equipped with a salt pouring grille 110. The salt pouring grille 110 is cylindrical, an end of the salt pouring grille 110 away from the middle frame assembly 20 extends into the box body 10, the operator can add salt into the box body 10 through the first through opening 24, and the first through opening 24 serves as a salt adding opening.

The resin tank 60 shown in this embodiment is provided in the receiving cavity 11. A bottom of the resin tank 60 is connected to a bottom of the box body 10. The second through opening 25 is opposite to the top of the resin tank 60. After the second through opening 25 is opened through the second top cover assembly 40, the operator can directly observe the valve control assembly 80 on the top of the resin tank 60 through the second through opening 25. Therefore, in this embodiment, the second through opening 25 serves as the maintenance opening.

It should be noted that the middle frame assembly 20 includes the middle frame 21 and the middle frame decorative ring 22. The above-mentioned first through opening 24 and the second through opening 25 are provided in the middle frame 21, and the middle frame decorative ring 22 sleeves on the outer side of the middle frame 21. In order to avoid affecting the installation of the salt pouring grille 110 in the first through opening 24, in this embodiment, the snap-fit assembly 23 shown in the above embodiment can be provided at an inner wall of the second through opening 25.

In this embodiment, since both the first top cover assembly 30 for controlling the opening and closing of the salt adding opening and the second top cover assembly 40 for controlling the opening and closing of the maintenance opening are integrated on the middle frame assembly 20, the operator does not need to consider an order in which the first top cover assembly 30 and the second top cover assembly 40 are opened when performing after-sales maintenance of the water softener, and only needs to disassemble the middle frame assembly 20 from a box opening 12 to implement the overall disassembly of the top cover device, which is simple and convenient, and the maintenance operation is simplified.

Based on the solution shown in the above embodiment, as shown in FIG. 14, the present embodiment further provides a water softener. The water softener includes a box body 10 and a top cover device.

As shown in FIG. 14, a receiving cavity 11 is formed inside the box body 10 of the water softener, and a box opening 12 communicating with the receiving cavity 11 is formed at the top of the box body 10.

The top cover device includes a middle frame assembly 20, which is detachably connected to the box opening 12. The middle frame assembly 20 is inclined in a first direction relative to the bottom surface of the box body 10 to guide water on a surface of the middle frame assembly 20 to flow into the receiving cavity 11. The surface of the middle frame assembly 20 is provided with the mounting component shown in the above embodiment, and the mounting component is used to mount the plug assembly 100.

The mounting component shown in this embodiment protrude from the surface of the middle frame assembly 20. The mounting component can further prevent the water on the surface of the middle frame assembly 20 from flowing into the plug assembly 100, and the mounting component is used for mounting the plug assembly 100. After the water softener is filled with water, the water droplets attached to the surface of the middle frame assembly 20 will automatically flow along the surface of the middle frame assembly 20 under the action of its own gravity, and flow into the box body 10, thus the inclined arrangement of the middle frame assembly 20 can prevent water or liquid droplets from entering the plug assembly 100 as much as possible, which ensures the normal operation of the water softener and the safety of power supply.

As shown in FIG. 14, an included angle α between the first direction and the bottom surface of the box body 10 shown in this embodiment is 5° to 30°. For example, the included angle α may be specifically 5°, 10°, 20° and 30°, no specific limit is made here.

In some embodiments, the water softener shown in this embodiment further includes: a first top cover assembly 30 and a second top cover assembly 40. The first top cover assembly 30 is connected to the middle frame assembly 20 and is opposite to the first through opening 24 on the middle frame assembly 20 for closing or opening the first through opening 24. The second top cover assembly 40 is connected to the middle frame assembly 20, and is opposite to the second through opening 25 on the middle frame assembly 20 for closing or opening the second through opening 25. The first through opening 24 and the second through opening 25 on the middle frame assembly 20 communicate with the receiving cavity 11 respectively, and the middle frame assembly 20 is detachably connected to the box opening 12.

Since the first top cover assembly 30 and the second top cover assembly 40 are respectively mounted on the middle frame assembly 20, the first top cover assembly 30 and the second top cover assembly 40 are also inclinedly distributed accordingly when the middle frame assembly 20 is inclinedly provided, so that the whole top cover device is distributed inclinedly. In practical applications, if water droplets are attached to the outer surface of the top cover device, and the water droplets can flow along the outer surface of the top cover device under the action of their own gravities, thereby preventing the water droplets from flowing into the box body 10.

The aesthetics of the overall structure of the water softener is ensured by arranging the top cover device in an inclined distribution structure. When the water softener is placed in door, a side of the water softener close to the first end of the middle frame assembly 20 can be placed against the wall, and the layout of the water softener can be consistent with the indoor environment.

Since the first through opening 24 is a salt adding opening and the second through opening 25 is the maintenance opening, a vertical height of a center of the second through opening 25 relative to the bottom surface of the box body 10 can be greater than a vertical height of a center of the first through opening 24 relative to the bottom surface of the box body 10. In this embodiment, by this arrangement, the height of the salt adding opening is reduced, and the operator can easily add salt to the box body 10 directly through the salt adding opening. The operation is simple and convenient.

In some embodiments, as shown in FIG. 16, in order to facilitate maintenance of the valve control assembly 80 on the top of the resin tank 60, the second top cover assembly 40 is detachably connected to the middle frame assembly 20.

In this embodiment, the second top cover assembly 40 and the middle frame assembly 20 can be connected through a buckle structure. In some embodiments, a buckle block may be provided at the second top cover assembly 40 and a buckle slot matched with the buckle block may be provided at the middle frame assembly 20. When the second top cover assembly 40 is mounted, the buckle block of the second top cover assembly 40 is directly buckled into the buckle slot on the middle frame assembly 20. The operation is simple and convenient.

In some embodiments, at least one of a human-computer interaction module or a display window is provided at the second top cover assembly 40.

The human-computer interaction module shown in this embodiment is used by the operator to input relevant control instructions to the water softener and display relevant operating parameters of the water softener. The human-computer interaction module can be any one or more of digital displays, touch screen controllers and physical buttons.

In order to facilitate the operator to directly observe a fault state of the valve control assembly 80 at the top of the resin tank 60, a display window may further be provided at the second top cover assembly 40 in this embodiment. For example, in this embodiment, a through hole can be provided in the middle region or edge area of the second top cover assembly 40, and a transparent glass or transparent plastic plate can be mounted at the through hole, and the transparent glass or transparent plastic plate can form the display window shown in this embodiment.

Therefore, based on the roles of displaying data and observing a window played by the second top cover assembly 40 in practical applications, the second top cover assembly 40 can also be called a display cover assembly.

In the related art, when the resin tank 60 of the water softener is fixed, the bottom of the resin tank 60 is usually mounted on the bottom end of the box body 10. After the top of the resin tank 60 passes through the inner frame 70, a fixing plate 50 is used to fix the resin tank 60.

However, in actual applications, the box body 10 is deformed to a certain extent due to differences in processing, and the resin tank 60 also has differences in height and dimensions due to processing or assembly deviations. However, a traditional fixing disc 50 lacks certain flexibility when fixing the resin tank 60, and it is difficult to meet requirements for installation of the fixing disc 50 and the fixing of the resin tank 60.

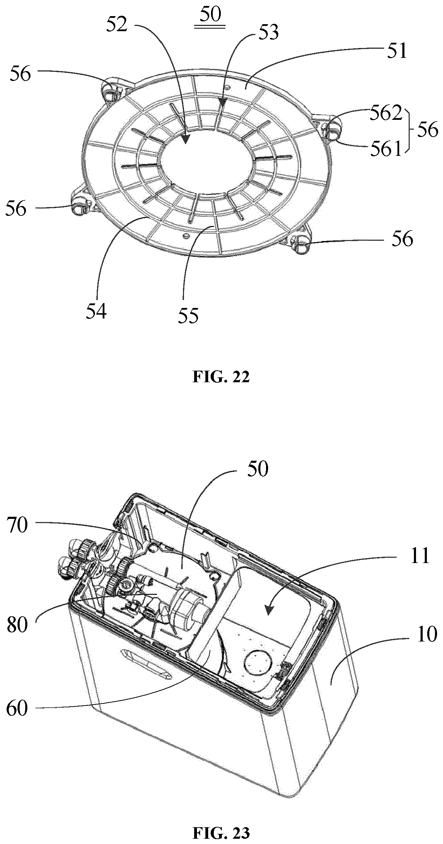

As shown in FIG. 22 and FIG. 14, in order to solve the above problems, the present embodiment further provides a fixing disc 50. The fixing disc 50 includes a flexible disc body 51, and a first opening 52 and a plurality of notches 53 are provided at the flexible disc body 51. The plurality of notches 53 are respectively arranged along a circumferential direction of the first opening 52, and opening ends of the notches 53 are formed at an opening wall of the first opening 52.

In this embodiment, when the top of the resin tank 60 is fixed, the flexible disc body 51 may be connected to the box body 10, and the first opening 52 of the flexible disc body 51 may be sleeved on the top of the resin tank 60. As such, even if a height of the resin tank 60 changes, the shape of the first opening 52 can undergo greater elastic deformation along a central axis of the resin tank 60 based on the design of the notch 53 on the flexible disc body 51. The first opening 52 can fix the top of the resin tank 60 in an interference fit. The fixing disc 50 not only meets an installation requirement in the box body 10, but also increases the flexibility of fixing the resin tank 60, and the fixing operation is simple and convenient.

The flexible disc body 51 shown in this embodiment may be a rubber disc body or a plastic disc body with certain elastic deformation characteristics.

The shape of the first opening 52 on the flexible disc body 51 may be a circle, a square, a regular pentagon, etc., and is not specifically limited here. The shape of the first opening 52 may be circular, and the diameter of the first opening 52 is less than or equal to the maximum diameter of the top of the resin tank 60 when the flexible disc body 51 is in a natural state.

In addition, the shape of the notch 53 shown in this embodiment can be a strip or an arc, which is not specifically limited here. When the shape of the notch 53 is a strip, the notch 53 can extend in a linear shape or in an arc shape. When the shape of the notch 53 is an arc, the shape of the notch 53 may be semicircular or crescent-shaped. The shape of the notch 53 can also be triangular, trapezoidal or other shapes.

As shown in FIG. 22, the shape of the first opening 52 shown in this embodiment is circular, and the notch 53 is a strip-shaped and extends along a radial direction of the first opening 52.

In this embodiment, based on the optimized design of the shapes of the first opening 52 and the notch 53, it is ensured that the shape of the first opening 52 can undergo large deformation along the central axis of the resin tank 60 without excessively affecting changes of the overall shape of the flexible disc body 51 to ensure the reliability of fixing the top of the resin tank 60.

As shown in FIG. 22, in order to ensure that the first opening 52 can still maintain a circular shape after being deformed along the central axis of the resin tank 60 to reliably fix the top of the resin tank 60, a plurality of notches 53 are evenly distributed circumferentially relative to the center of the first opening 52 in this embodiment.

In this embodiment, a plurality of strip-shaped notches 53 are evenly distributed circumferentially relative to the center of the first opening 52, and each notch 53 extends along the radial direction of the first opening 52. The number of notches 53 can be set to 10 to 12, which is not specifically limited here.

As shown in FIG. 22, in order to increase a structural strength of the flexible disc body 51, a reinforcing structure is provided at the surface of the flexible disc body 51 in this embodiment.

In this embodiment, the reinforcing structure can be provided at a first surface of the flexible disc body 51, it can also be provided at a second surface of the flexible disc body 51, or it can be provided at both the first surface of the flexible disc body 51 and the second surface of the flexible disc body 51.

The reinforcing structure is integrally formed at the surface of the flexible disc body 51, and the reinforcing structure may be a boss or a reinforcing rib protruding from the surface of the flexible disc body 51. For example, when the reinforcing structure is a boss, a plurality of bosses can be provided, the plurality of bosses are discretely distributed, and the shape of each boss is cylindrical or cubic. When the reinforcing structure is a reinforcing rib, a plurality of reinforcing ribs can be provided, and the plurality of reinforcing ribs intersect or are parallel to each other.

As shown in FIG. 22, the reinforcing structure shown in this embodiment includes first reinforcing ribs 54 extending along a circumferential direction relative to the center of the first opening 52; and/or the reinforcing structure includes second reinforcing ribs 55, extending along the radial direction of the first opening 52.

It may be understood that in this embodiment, the first reinforcing ribs 54 are provided at the surface of the flexible disc body 51. The first reinforcing ribs 54 can be arranged in an arc shape extending along the circumferential direction relative to the center of the first opening 52, or can be arranged in an annular shape extending along the circumferential direction relative to the center of the first opening 52. A plurality of first reinforcing ribs 54 may be provided, and radial distances of the plurality of first reinforcing ribs 54 relative to the center of the first opening 52 may be the same or different.

It should be noted that, in this embodiment, when the first reinforcing ribs 54 are provided, it should be ensured that positions of the first reinforcing ribs 54 on the flexible disc body 51 and a position of the notch 53 on the flexible disc body 51 are staggered.

In this embodiment, the second reinforcing ribs 55 can be also provided at the surface of the flexible disc body 51, and lengths of each second reinforcing rib 55 extending along the radial direction of the first opening 52 can be equal to a radial distance between a wall surface of the first opening 52 and a rim of the flexible disc body 51, and it may also be shorter than the radial distance between the wall surface of the first opening 52 and the rim of the flexible disc body 51. A plurality of second reinforcing ribs 55 may be provided, and the plurality of second reinforcing ribs 55 are evenly distributed circumferentially relative to the center of the first opening 52.

In addition, in this embodiment, the first reinforcing ribs 54 and the second reinforcing ribs 55 shown in the above embodiment can be provided at the surface of the flexible disc body 51. Specific structural forms and layout form of the first reinforcing ribs 54 and the second reinforcing ribs 55 will not be described one by one.

Based on the solution shown in the above embodiment, the flexible disc body 51 shown in this embodiment is disc-shaped, and the first opening 52 is circular in a natural state and is coaxially arranged with the flexible disc body 51.

As shown in FIG. 22, in order to facilitate the connection between the flexible disc body 51 and the box body 10 of the water softener, a fixing structure is provided at the flexible disc body 51.

The fixing structure can be a fixing hole, a plug connector, etc., provided at the flexible disc body 51. There is no specific limitation here, as long as it is convenient to connect the flexible disc body 51 to the box body 10 of the water softener.

In some examples, in order to facilitate assembly and disassembly of the flexible disc body 51 and the box body 10, the fixing structure shown in this embodiment includes a plug 56, and the plug 56 is provided at the first surface of the flexible disc body 51, and is close to the rim of the flexible disc body 51.

It may be understood that, in this embodiment, the plug 56 can be provided at the first surface of the flexible disc body 51, and a radial distance between the plug 56 and the rim of the flexible disc body 51 is less than a predetermined value. In this embodiment, a connection tab extending outward in the radial direction of the flexible disc body 51 can also be provided at the rim of the flexible disc body 51, and the plug 56 is provided at the connection tab.

In practical applications, in this embodiment, an inner frame 70 is mounted on the box opening 12 of the box body 10. The inner frame 70 is connected to the box body 10, and the inner frame 70 is provided with a second opening and a socket. The resin tank 60 is inserted through the second opening, and after the first opening 52 on the flexible disc body 51 sleeves on the top of the resin tank 60, the plug 56 on the flexible disc body 51 can be directly inserted into the socket to conveniently fix the resin tank 60.

The plug 56 is provided at the rim of the flexible disc body 51 to meet a deformation requirement of the flexible disc body 51, and the flexible disc body 51 can fix the top of the resin tank 60.

In some embodiments, a plurality of plugs 56 shown in this embodiment are provided. The plurality of plugs 56 are respectively provided at the first surface of the flexible disc body 51 and are arranged along a circumferential direction relative to the center of the first opening 52.

When the flexible disc body 51 is disc-shaped, the plurality of plugs 56 are sequentially arranged along the rim of the flexible disc body 51. In this embodiment, the plurality of plugs 56 may be further evenly distributed circumferentially relative to the center of the first opening 52.

In order to meet a fixing requirement of the flexible disc body 51, in this embodiment, while the second opening is provided at the inner frame 70, a plurality of sockets are further provided at the inner frame 70. After the first opening 52 on the flexible disc body 51 sleeves on the top of the resin tank 60, the plurality of plugs 56 on the flexible disc body 51 can be directly inserted into the plurality of sockets in a one-to-one correspondence manner, to facilitate the fixing of the resin tank 60, and the operation is simple and convenient.

As shown in FIG. 22, the plug 56 shown in this embodiment includes a guide portion 561 and a snap-fit portion 562; the snap-fit portion 562 is provided at a side of the guide portion 561, and a snap-fit opening is formed at a side of the snap-fit portion 562 away from the guide portion 561.

When the plug 56 is in a first state, a gap is formed between a side of the snap-fit portion 562 towards the guide portion 561 and the guide portion 561. When the plug 56 is in a second state, the side of the snap-fit portion 562 towards the guide portion 561 is bonded to the guide portion 561.

In this embodiment, by providing the plug 56 having the guide portion 561 and the snap-fit portion 562, the guide portion 561 can guide an entire structure of the plug 56 to be inserted into the socket on the inner frame 70, and the plug 56 and the socket on the inner frame 70 form a buckle connection through the snap-fit portion 562 to prevent the plug 56 from disengaging from the socket.

Before the plug 56 is assembled with the socket, since the guide portion 561 and the snap-fit portion 562 on the plug 56 do not undergo external forces, the plug 56 is in the first state, and a gap is formed between a side of the snap-fit portion 562 towards the guide portion 561 and the guide portion 561.

However, when the plug 56 is inserted into the socket, the snap-fit portion 562 and the guide portion 561 will elastically deform under the limit of the socket and gradually approach each other until the side of the snap-fit portion 562 towards the guide portion 561 is bonded to the guide portion 561. Only after a snap-fit opening on the snap-fit portion 562 is connected to a side wall of the socket on the inner frame 70 by a snap-fit, the snap-fit portion 562 and the guide portion 561 are separated from each other.

Therefore, based on the optimized design of the plug 56, it is ensured that the plug 56 can be stably inserted into the socket on the inner frame 70 without disengagement. Only when the operator exerts a large pulling force on the plug 56, the side of the snap-fit portion 562 towards the guide portion 561 is forced to be bonded to the guide portion 561, and the plug 56 can be pulled out smoothly from the socket.

Based on the solution shown in the above embodiment, this embodiment further provides a water softener. The water softener includes a box body 10, a resin tank 60 and a fixing disc 50 as shown above. A receiving cavity 11 is provided inside the box body 10; the resin tank 60 is provided in the receiving cavity 11 and connected to the box body 10; the flexible disc body 51 corresponding to the fixing disc 50 is detachably connected to the box body 10, and a first opening 52 on the flexible disc body 51 sleeves on the top of the resin tank 60.

Since the water softener shown in this embodiment includes the fixing disc 50, and the specific structure of the fixing disc 50 refers to the above-mentioned embodiment, the water softener shown in this embodiment includes all the solutions of the above-mentioned embodiment. Therefore, it has at least all the beneficial effects brought by all the technical solutions of the above embodiments, and will not be repeated here.

As shown in FIG. 14, the water softener shown in this embodiment further includes an inner frame 70. The inner frame 70 is provided inside the receiving cavity 11. The inner frame 70 is connected to the box body 10. The inner frame 70 is provided with a second opening and a plurality of sockets. The resin tank 60 passes through the second opening, and a plurality of plugs 56 on the flexible disc body 51 are inserted into the plurality of sockets in a one-to-one correspondence.

As such, after the bottom of the resin tank 60 is fixed to the bottom surface of the box body 10, and the top of the resin tank 60 extends from the second opening on the inner frame 70, the operator only needs to sleeve the first opening of the fixing disc 50 on the top of the resin tank 60, insert each plug 56 on the fixing disc 50 into each socket on the inner frame 70 in a one-to-one correspondence, so as to fixedly connect the fixing disc 50 and the inner frame 70, and fix the top of the resin tank 60 based on the fixing disc 50. The operation is simple and convenient.

Finally, it should be noted that the above embodiments are only used to illustrate the present disclosure, but not to limit the present disclosure. Although the present disclosure has been described in detail with reference to the embodiments, those skilled in the art should understand that various combinations, modifications, or equivalent replacements of the solutions of the present disclosure do not depart from the scope of the solutions of the present disclosure, and should all cover the scope of the claims of the present disclosure.

## Claims

1. A top cover assembly, comprising: a first frame body, formed with a first opening; a first top cover component, wherein the first top cover component is connected to the first frame body through a flexible member, and is switchable between an open state and a closed state; and a second top cover component, wherein the second top cover component is connected to the first frame body and located on a side of the first opening, wherein in the closed state, the first top cover component covers the first opening; and in the open state, the first top cover component is located above the second top cover component, and an included angle between the first top cover component and the second top cover component is less than a predetermined angle.

2. The top cover assembly of claim 1, wherein the flexible member is detachably connected to at least one of the first frame body or the first top cover component.

3. The top cover assembly of claim 2, wherein at least one of the first frame body or the first top cover component is provided with a snap-fit slot, and the flexible member is connected within the snap-fit slot by a snap-fit.

4. The top cover assembly of claim 3, wherein a limit block is provided at an end of the flexible member snap-fitted with the snap-fit slot, and the limit block is matched with the snap-fit slot limitedly.

5. The top cover assembly of any one of claims 1 to 4, wherein the first top cover component comprises: a first housing; a second housing provided at a first side of the first housing, wherein a receiving cavity is formed inside the second housing, and a side of the second housing towards the first housing has an opening; and a first seal, formed with at least two sealing surfaces, wherein the first seal is provided at the first side of the first housing, and a side edge of the opening is matched hermetically with the sealing surfaces of the first seal; or the first seal is provided at a side edge of the opening and the first side of the first housing are matched hermetically with the sealing surfaces of the first seal.

6. The top cover assembly of claim 5, wherein a positioner is provided at the first side of the first housing or a side edge of the opening, and the first seal is provided within the positioner.

7. The top cover assembly of claim 6, wherein the positioner is a snap-fit slot, and the first seal is snapped in the snap slot.

8. The top cover assembly of any one of claims 5 to 7, wherein the first seal is formed with two sealing surfaces, and the first seal comprises a first sealing portion and a second sealing portion connected to a side of the first sealing portion, a first sealing surface is formed at a side of the first sealing portion towards the side edge of the opening or the first side of the first housing, and a second sealing surface is formed at a side of the second sealing portion towards the side edge of the opening or the first side of the first housing.

9. The top cover assembly of any one of claims 5 to 8, wherein the first seal is formed with three sealing surfaces, and comprises a first sealing portion, a second sealing portion disposed opposite to the first sealing portion and a third sealing portion connected to the first sealing portion and the second sealing portion respectively; the side edge of the opening or a protruding ridge formed at the first side of the first housing is embedded between the first sealing portion and the second sealing portion, a first sealing surface is formed at a side of the first sealing portion towards the side edge of the opening or the side of the protruding ridge, a second sealing surface is formed at a side of the second sealing portion towards the side edge of the opening or the side of the protruding ridge, and a third sealing surface is formed at a side of the third sealing portion towards the side edge of the opening or the side of the protruding ridge.

10. The top cover assembly of any one of claims 5 to 9, further comprising: a light-transmitting panel provided at a second side of the first housing, and matched hermetically with the second side of the first housing.

11. The top cover assembly of claim 10, wherein a side edge of the second side of the first housing is formed with a raised edge surrounding a periphery of the light-transmitting panel, and a height of the raised edge is the same as a thickness of the light-transmitting panel.

12. The top cover assembly of claim 11, wherein a side of the raised edge towards the center of the first housing is formed with a round of grooves, and the grooves are configured to receive colloid for bonding the light-transmitting panel to the first housing.

13. A water softening device, comprising a machine body and a top cover assembly of any one of claims 1 to 12, wherein the machine body is connected to a first frame body.

14. A top cover device, comprising: a middle frame assembly, wherein the middle frame assembly is provided with a first through opening and a second through opening, and the middle frame assembly is detachably connected to a box body of the water softener; a first top cover assembly, wherein the first top cover assembly is connected to the middle frame assembly, and is opposite to the first through opening for closing or opening the first through opening; and a second top cover assembly, wherein the second top cover assembly is connected to the middle frame assembly, and is opposite to the second through opening for closing or opening the second through opening.

15. The top cover device of claim 14, wherein the first top cover assembly comprises: a cover body and a crank arm; a first end of the crank arm is connected to an end of the cover body, and a second end of the crank arm is connected to the middle frame assembly rotatably, and the cover body is flippable between a first position at which the first through opening is closed and a second position at which the first through opening is opened.

16. The top cover device of claim 15, wherein the crank arm comprises a long-arm segment and a short-arm segment, wherein the long-arm segment is arc-shaped, and the short-arm segment is linear, a first end of the long-arm segment is connected to an end of the cover body, a second end of the long-arm section is connected to a first end of the short-arm segment, and a second end of the short-arm segment is rotatably connected to the middle frame assembly, wherein a distance between the second end of the short-arm segment and the first end of the long-arm segment is shorter than a distance between the first end of the short-arm segment and the first end of the long-arm segment.

17. The top cover device of claim 15 or 16, wherein the first top cover assembly further comprises: a stop portion and an abut portion, wherein the stop portion is connected to the crank arm; the abut portion is provided at the middle frame assembly; the stopper portion is separated from the abut portion when the cover body is in the first position; and the stopper portion abuts against the abut portion when the cover body is in the second position.

18. The top cover device of claim 17, wherein the stop portion is provided at an outer side of the crank arm.

19. The top cover device of claim 17 or 18, wherein the crank arm is provided with a plurality of mounting positions provided in sequence along an extension direction of the crank arm, where the stop portion is detachably connected to any one of the plurality of mounting positions.

20. The top cover device of any one of claims 15 to 19, wherein the first top cover assembly further comprises: a damping shaft with an end connected to the second end of the crank arm, and another end connected to the middle frame assembly.

21. The top cover device of any one of claims 14 to 20, wherein the second top cover assembly is detachably connected to the middle assembly.

22. The top cover device of any one of claims 14 to 21, wherein at least one of a human-computer interaction module or a display window is provided at the second top cover assembly.

23. A water softener, comprising: a box body, wherein a receiving cavity is formed inside the box body, and a box opening is formed at the top of the box body communicating with the receiving cavity; and a resin tank, located in the receiving cavity; and a top cover device of any one of claims 14 to 22, wherein the middle frame assembly is detachably mounted on the box opening, the first through opening and the second through opening communicate with the receiving cavity respectively, and the second through opening is arranged opposite to the resin tank.
